# FASCICULE DE BREVET EUROPEEN

(11) **EP 4 262 398 B1**
(45) Date de publication et mention de la délivrance du brevet: **06.05.2026**
(21) Numéro de dépôt: 21835777.0
(22) Date de dépôt: 17.12.2021
(51) Int. Cl.: A01N 63/38, A01P 3/00

(54) **AGENT DE BIOCONTRÔLE ET SON UTILISATION POUR LA LUTTE CONTRE DES MALADIES FONGIQUES DE PLANTES**
WIRKSTOFF ZUR BIOKONTROLLE PFLANZLICHER PILZKRANKHEITEN
BIOCONTROL AGENT AND ITS USE AGAINST FUNGAL PLANT DISEASES

(30) Priorité: 18.12.2020 FR 2013646
(43) Date de publication de la demande: 25.10.2023
(73) Titulaire: Agro Industrie Recherches et Developpements A.R.D., 51110 Pomacle (FR); Rittmo Agroenvironnement, 68025 Colmar Cedex (FR)
(72) Inventeur: LEPORINI, Sophie, 08300 Perthes (FR); BELLOY, Christian, 08130 Saint-Loup Terrier (FR); NASSR, Najat, 68390 Sausheim (FR); LANGENFELD NARDIN, Aude, 68100 Illzach (FR); PFISTER, Carole, 68480 Linsdorf (FR)
(74) Mandataire: Cabinet Grosset-Fournier & Demachy
(86) Numéro de dépôt international: PCT/EP2021/086415
(87) Numéro de publication internationale: WO 2022/129478

(56) Documents cités:
- WO-A1-2020/254533
- MICHELE PERAZZOLLI ET AL: "T39 induces resistance against downy mildew by priming for defense without costs for grapevine", BIOLOGICAL CONTROL, SAN DIEGO, CA, US, vol. 58, no. 1, 11 April 2011 (2011-04-11), pages 74 - 82, XP028213799, ISSN: 1049-9644, [retrieved on 20110417], DOI: 10.1016/J.BIOCONTROL.2011.04.006

## Description

### DOMAINE DE L'INVENTION

La présente invention concerne un nouvel agent de biocontrôle et son utilisation pour la lutte contre des maladies fongiques de plantes.

### ART ANTERIEUR

*Plasmopara viticola* est un champignon de la famille des *Peronosporaceae* de la classe des Oomycètes. Il existe sous la forme de spores libres ou de mycélium ne pouvant croître qu'à l'intérieur des tissus de la vigne qu'il parasite et à cet égard, il est l'agent pathogène du mildiou de la vigne. Sa présence est signalée en Europe pour la première fois en Aquitaine en 1878. Importée du continent américain au XIXe siècle, cette maladie dévastatrice, particulièrement dans les climats chauds et humides, attaque les feuilles et les baies jeunes de la vigne. Contaminant les organes herbacés de la vigne, *Plasmopara viticola* peut entraîner d'importantes pertes de récoltes, ainsi que des problèmes de qualité des vins et d'affaiblissement des ceps. De ce fait, *Plasmopara viticola* plus communément appelé le mildiou de la vigne constitue un problème agronomique majeur avec des conséquences économiques élevées.

Même si des fongicides chimiques ont montré des résultats positifs pour contrôler le mildiou de la vigne causé par *Plasmopara viticola,* la phytotoxicité de ces produits et les éventuels résidus sont de réels problèmes induisant un impact environnemental et des risques pour la santé humaine. L'apparition de résistance à ces molécules est également un problème.

Dans un souci de respect de l'environnement, il a alors été développé des moyens de lutte biologique naturelle à l'aide de microorganismes. Cette dernière, également appelée lutte microbiologique directe, consiste à introduire des antagonistes microbiens spécifiques dans le sol ou sur le matériel végétal. Ces antagonistes, également appelés agents de lutte biologique ou BCA (*Biological Control Agent*), peuvent interférer avec la croissance et/ou la survie des agents pathogènes permettant ainsi de les contrôler. Pour ce faire, les agents de lutte biologique ou BCA peuvent contrôler les pathogènes cibles grâce à un ou plusieurs modes d'action :
- la compétition, laquelle peut avoir lieu entre le BCA et l'agent pathogène pour l'oxygène, pour l'espace, ou encore pour les nutriments ;
- l'antibiose, laquelle correspond aux interactions impliquant au moins un composé diffusible de faible masse moléculaire ou un antibiotique produit par un microorganisme qui inhibe la croissance d'un autre microorganisme;
- le parasitisme et la production d'enzymes hydrolytiques et/ou de métabolites antibiotiques au détriment d'un autre organisme hôte ; et/ou
- l'induction de résistance chez la plante hôte (« élicitation ») à l'image des bactéries de la rhizosphère, connues sous le nom de PGPR (*Plant Growth Promoting Rhizobacteria*), lesquelles sont capables d'induire chez la plante une résistance systémique induite (ISR, *Induced Systemic Resistance*) qui permet d'accroître la résistance aux pathogènes grâce à un phénomène de potentialisation (ou *priming*), qui correspond à un état de veille permettant une réponse immunitaire plus rapide et plus intense de la plante.

Le genre *Trichoderma* comprenant diverses espèces de champignons susceptibles d'être des agents de biocontrôle, leur mode d'action a fait l'objet de nombreux travaux. Depuis, le genre *Trichoderma* est connu pour son activité de biocontrôle vis-à-vis des agents pathogènes telluriques (vivants dans le sol) mais avec une faible compétitivité au niveau de la rhizosphère des plantes (zone sol-racine). De plus et bien qu'il existe des produits commerciaux à base de *Trichoderma* (*e.g.* BLINDAR, ESQUIVE WP ou VINTEC) aucun n'a démontré d'efficacité pour lutter contre le mildiou de la vigne. Force est de constater que dans la lutte contre *Plasmopara viticola,* les viticulteurs de plus en plus soucieux de l'environnement se retrouvent démunis et de ce fait, il y a là un véritable défi à relever. MICHELE PERAZZOLLI et al.: "T39 induces resistance against downy mildew by priming for defense without costs for grapevine", BIOLOGICAL CONTROL, vol. 58, no. 1, pages 74-82, décrit l'utilisation d'une souche de *Trichoderma* pour induire dans la vigne une résistance à *Plasmopara.*

### BREF APERÇU

Dans ce contexte de lutte contre des maladies fongiques, telle que le mildiou de la vigne, un premier but de l'invention consiste à la mise à disposition de compositions phytosanitaires pour la prévention et/ou le traitement de maladies fongiques de végétaux contenant comme agent de lutte biologique (ou agent de biocontrôle) une souche efficace appartenant au genre *Trichoderma.* Un autre but de l'invention correspond à la mise à disposition des procédés permettant de fabriquer lesdites compositions et de mettre en œuvre la prévention et/ou le traitement de maladies fongiques de végétaux.

### DESCRIPTION DETAILLEE

Dans son aspect le plus général, l'invention a pour objet l'utilisation d'une souche isolée de *Trichoderma atroviride* dans la prévention et/ou le traitement d'infection chez un végétal provoquée par le champignon pathogène *Plasmopara viticola,*
ladite souche isolée de *Trichoderma atroviride* étant la souche TAL-17 déposée le 03 juillet 2018 à la Collection Nationale de Cultures de Microorganismes (CNCM ; Institut Pasteur, 25-28 rue du Docteur Roux, F-75724 PARIS CEDEX 15) sous le numéro CNCM I-5333 et/ou un de ses mutants,
ledit un de ses mutants étant obtenu à partir de la souche TAL-17 déposée le 03 juillet 2018 à la CNCM sous le numéro CNCM I-5333 et ledit un de ses mutants ayant les mêmes propriétés physiologiques que celles de la souche TAL-17 déposée le 03 juillet 2018 à la CNCM sous le numéro CNCM I-5333 ou des propriétés physiologiques améliorées par rapport à celle de la souche TAL-17 déposée le 03 juillet 2018 à la CNCM sous le numéro CNCM I-5333 dans la prévention et/ou le traitement d'infection chez un végétal provoquée par le champignon pathogène *Plasmopara viticola.*

En effet et de manière surprenante, cette souche isolée de *Trichoderma atroviride* TAL-17 (et/ou un de ses mutants) développée par les inventeurs possède d'excellentes propriétés stimulatrices de croissance, des propriétés antagonistes utiles en agriculture ainsi qu'une grande stabilité en matière de viabilité. De fait, elle constitue un agent de biocontrôle idéal pour lutter efficacement contre des maladies fongiques de plantes telle que le mildiou de la vigne.

Par « souche isolée », on entend la culture d'un microorganisme unique qui a été isolée à partir de différents microorganismes présents sur et/ou dans les tissus d'un fragment de feuille de blé cultivé en champs.

Par « un de ses mutants », on entend des souches mutantes fonctionnelles obtenues par mutations ou manipulations génétiques d'une souche de référence, laquelle dans le contexte de l'invention est la souche isolée de *Trichoderma atroviride* TAL-17 déposée le 03 juillet 2018 à la CNCM sous le numéro CNCM I-5333. Par « souches mutantes fonctionnelles », on entend que ces mutants conserventles mêmes propriétés physiologiques que la souche de référence (*i.e.* TAL-17) voire peuvent présenter des propriétés physiologiques améliorées (*e.g.* amélioration des capacités de biocontrôle). Aussi, un des objets de l'invention concerne également une souche isolée de *Trichoderma atroviride,* ladite souche isolée étant une souche mutante de la souche isolée de *Trichoderma atroviride* TAL-17 déposée le 03 juillet 2018 à la CNCM sous le numéro CNCM I-5333.

Par « un de ses mutants », on entend également et ce, de manière alternative ou cumulative, des souches mutantes fonctionnelles (*cf. supra*) lesquelles possèdent une identité de séquence d'au moins 98% avec la séquence SEQ ID NO : 5 du gène *ech42* de la souche TAL-17 déposée le 03 juillet 2018 à la CNCM sous le numéro CNCM I-5333.

Par « une identité de séquence d'au moins 98% avec la séquence SEQ ID NO : 5 », on entend une identité de séquence d'au moins 98,5%, d'au moins 99% voire d'au moins 99,5% avec la séquence SEQ ID NO : 5 représentée par la séquence d'acide nucléique suivante : sachant qu'au sens de l'Invention, l'identité de séquence est mesurée par les outils classiques de comparaison de séquences connues de l'homme du métier tels que les algorithmes de la plateforme BLAST ou le programme MatGat (Campanella, Bitincka and Smalley, 2003).

Par ailleurs et aux fins de l'Invention, il est entendu que les expressions « la souche de l'invention », « la souche isolée de l'invention », « la souche isolée de *Trichoderma atroviride* de l'invention », « la souche isolée TAL-17 et/ou un de ses mutants », « la souche de l'invention et/ou un de ses mutants » et « la souche isolée de *Trichoderma atroviride* de l'invention et/ou un de ses mutants » sont interchangeables et désignent toutes la souche isolée de *Trichoderma atroviride* TAL-17 déposée le 03 juillet 2018 à la CNCM sous le numéro CNCM I-5333 et/ou un de ses mutants. De plus, par « la souche isolée de *Trichoderma atroviride* TAL-17 [...] et/ou un de ses mutants », on entend que l'invention concerne soit la souche isolée TAL-17, soit un de ses mutants, soit la souche TAL-17 en combinaison avec un de ses mutants. L'ensemble de ces souches (*i.e.* TAL-17 et ses mutants), peuvent par ailleurs être facilement identifiées *via* la méthode dite de *Polymerase Chain Reaction* en temps réel (qPCR). Les inventeurs ont en effet développé des outils spécifiques de celles-ci à savoir, une sonde TaqMan^{®} GS285741-P1 et un couple d'amorces nucléotidiques associé GS285741-F1 et GS285741-R1 (*cf.* Tableau 1), lesquelles permettent d'amplifier une séquence spécifique aux souches de l'invention (*cf.* Tableau 2).

**Tableau 1 : Amorces nucléotidiques (F1 et R1) et Sonde TaqMan^{®} (P1)**

| **Nom** | **Séquence** | **SEQ ID NO :** | **Tm (°C)** |
|---|---|---|---|
| GS285741-F1 | CGA-ATG-CCA-GAC-GAA-TCA-ATC | 1 | 47,3 |
| GS285741-R1 | AAC-GAG-ACT-TGA-CAG-TAG-CG | 2 | 60,0 |
| GS285741-P1 | | 3 | |

### FAM : 6-carboxyfluorescéine, MGB : minor groove binder

**Tableau 2 : Séquence cible des oligonucléotides et de la sonde TaqMan^{®} chez la souche TAL-17 et/ou ses mutants**

| **Nom** | **Séquence** | **SEQ ID NO :** |
|---|---|---|
| Del11_285741 Ins (251-264) | | 4 |

Selon ce même aspect, l'invention a également pour objet l'utilisation de la souche isolée de *Trichoderma atroviride* et/ou un de ses mutants telle que décrite ci-dessus, dans laquelle ladite souche isolée de *Trichoderma atroviride* et/ou un de ses mutants est sous forme de spores, lesdites spores étant produites par fermentation en milieu solide ou liquide et pouvant être sous forme purifiée ou dans la matrice de production, ladite matrice de production étant solide ou liquide.

Par « sous forme de spores », on entend sous forme de conidiospores ou chlamydospore, (plus particulièrement conidiospores) assurant la fonction de multiplication asexuée chez le champignon.

Par « fermentation en milieu solide (FMS) », on entend tout procédé permettant le développement du micro-organisme à la surface et/ou à l'intérieur d'une matrice de production poreuse solide et humidifiée, en absence d'eau libre.

Par « fermentation liquide », on entend tout procédé permettant le développement du micro-organisme à l'aide d'une matrice de production avec présence d'eau libre.

Par « matrice de production », on entend tout substrat naturel et/ou synthétique, qui permet le développement du micro-organisme et induit la production de biomasse, et/ou d'enzymes, et/ou de métabolites primaires et/ou secondaires. Des exemples de familles d'enzyme ou d'enzyme produites par le champignon sont des protéases, des chitinases et la *bêta*-1,3-glucanase.

Par « spores [...] sous forme purifiées », on entend les spores concentrées suite à l'élimination de la majeure partie du reste de la matrice après production n'ayant pas servi à la formation des spores, avec l'aide d'un procédé de tamisage par exemple.

Par « spores [...] dans la matrice de production », on entend les spores restées dans la matrice de production à l'issue du procédé de fabrication, sans étape de purification.

Selon un autre mode de réalisation, l'invention a également pour objet l'utilisation telle que décrite ci-dessus de la souche isolée de *Trichoderma atroviride* de l'invention, dans laquelle ledit végétal est la vigne.

Par « vigne », on entend des plantes grimpantes des régions au climat tempéré ou de type méditerranéen. Ce terme générique *(i.e.* vigne) est un nom désignant plusieurs taxons, essentiellement de la famille des *Vitaceae* (ou Vitacées) de laquelle relèvent les vignes domestiques largement cultivées pour leur fruit en grappes, le raisin, et que l'on mange ou dont on tire un jus pour, *e.g.,* en faire du vin. En particulier, on trouve aux côtés des genres *Parthenocissus* et *Ampelopsis,* le genre *Vitis.*

Selon un autre mode de réalisation, l'invention a donc pour objet l'utilisation telle que décrite ci-dessus de la souche isolée de *Trichoderma atroviride* de l'invention, dans laquelle ladite vigne appartient à un végétal de la famille des Vitacées, et en particulier dans laquelle ladite vigne appartient à un genre choisi parmi *Parthenocissus, Ampelopsis* et *Vitis,* leurs hybrides et leurs cultivars.

Parmi ces genres, il convient de noter qu'est principalement cultivé le genre *Vitis,* ses hybrides et ses cultivars, et notamment l'espèce *Vitis vinifera,* ses hybrides et ses cultivars. Par « hybrides », il est fait référence à une famille de cépages issus du croisement inter-espèce entre espèces de vignes, par exemple, entre les vignes européennes (*e.g. V. vinifera*) et les vignes américaines (*e.g. V. labrusca* ou *V. riparia*). Par « cultivars », il est fait référence à une famille de cépages issus du croisement au sein d'une même espèce. Aussi et selon un autre mode de réalisation, l'invention a pour objet l'utilisation telle que décrite ci-dessus de la souche isolée de *Trichoderma atroviride* de l'invention, dans laquelle ladite vigne appartient au un genre *Vitis,* ses hybrides et ses cultivars, et en particulier dans laquelle ladite vigne appartient à une espèce choisie parmi *Vitis labrusca, Vitis riparia* et *Vitis vinifera,* leurs hybrides et leurs cultivars.

Selon un autre mode de réalisation, l'invention a également pour objet l'utilisation telle que décrite ci-dessus de la souche isolée de *Trichoderma atroviride* de l'invention, dans laquelle ledit végétal est la vigne,
et en particulier dans laquelle ladite vigne appartient à un végétal de la famille des Vitacées notamment choisi parmi les genres *Parthenocissus, Ampelopsis* et *Vitis,* leurs hybrides et leurs cultivars.

Avantageusement, l'invention a pour objet l'utilisation telle que décrite ci-dessus de la souche isolée de *Trichoderma atroviride* de l'invention, dans laquelle ladite vigne appartient à l'espèce *Vitis vinifera,* ses hybrides et ses cultivars.

Au vu de ce qui précède, on comprend que la souche isolée de *Trichoderma atroviride* de l'invention et/ou un de ses mutants sont utilisés en tant qu'agent de lutte biologique. C'est-à-dire qu'ils sont capables d'interférer avec la croissance et/ou la survie des agents pathogènes permettant ainsi de les contrôler et ce, *via* l'un ou plusieurs des modes d'action décrits précédemment (*e.g. via* le développement de sa biomasse et/ou sa production d'enzymes et/ou de métabolites secondaires). Par exemple, un des moyens de mettre en évidence qu'une souche de *Trichoderma atroviride* selon l'invention est un agent de lutte biologique efficace est la réalisation d'essais sur feuilles détachées. Comme le sait l'homme du métier, ces essais peuvent être réalisés de différentes façons. Par exemple, il est possible d'utiliser des disques foliaires notamment mis en survie sur gélose et maintenu dans un milieu humide pour le bon développement de la maladie, *e.g.* le mildiou, qui est inoculé préalablement sur ces disques. L'agent de lutte biologique (*e.g.* la souche TAL-17 et/ou un de ses mutants) étant appliqué :
- soit en préventif sur feuille encore vivante sur plant ou appliqué sur les disques foliaires mis en survie sur boîte quelques heures à quelques jours avant l'inoculation de la maladie ;
- soit en traitement sur les disques foliaires mis en survie sur boîte quelques heures à quelques jours après l'inoculation de la maladie.

Dans le contexte de la lutte contre le mildiou de la vigne, de tels essais peuvent également être réalisés sur de jeunes feuilles entières (ou feuilles en croissance) mises en survie également en boîtes de Pétri selon la même logique.

A cet égard, l'invention a en particulier pour objet la souche isolée de *Trichoderma atroviride* de l'invention telle que décrite ci-dessus utilisée en tant qu'agent antifongique de végétaux. C'est-à-dire qu'elle est capable de lutter contre les champignons phytopathogènes. Par exemple, un des moyens de mettre en évidence qu'une souche de *Trichoderma atroviride* selon l'invention est un agent antifongique de végétaux est la réalisation d'un essai sur feuilles détachées. Par ailleurs et parmi les champignons phytopathogènes contre lesquels une souche de *Trichoderma atroviride* selon l'invention a un véritable effet inhibiteur on retrouve le champignon *Plasmopara viticola* responsable du mildiou de la vigne.

Selon un autre mode de réalisation, l'invention a donc pour objet la souche isolée de *Trichoderma atroviride* de l'invention telle que décrite ci-dessus en tant qu'agent de lutte biologique,
en particulier en tant qu'agent antifongique de végétaux dirigé contre le champignon pathogène *Plasmopara viticola.*

Avantageusement, l'invention a également pour objet la souche isolée de *Trichoderma atroviride* de l'invention telle que décrite ci-dessus en tant qu'agent de lutte biologique,
et en tant qu'agent antifongique de végétaux dirigé contre le champignon pathogène *Plasmopara viticola* (responsable du mildiou de la vigne).

Selon un autre aspect, est décrite l'utilisation d'une composition phytosanitaire dans la prévention et/ou le traitement chez un végétal d'infection provoquée par le champignon pathogène *Plasmopara viticola,* dans laquelle ladite composition phytosanitaire comprend :
- la souche isolée de *Trichoderma atroviride* TAL-17 déposée le 03 juillet 2018 à la CNCM sous le numéro CNCM I-5333 et/ou un de ses mutants en tant que principe actif ; ou
- les métabolites émis lors de la production la souche isolée de *Trichoderma atroviride* TAL-17 déposée le 03 juillet 2018 à la CNCM sous le numéro CNCM I-5333 et/ou un de ses mutants en tant que principe actif ; ou
- la souche isolée de *Trichoderma atroviride* TAL-17 déposée le 03 juillet 2018 à la CNCM sous le numéro CNCM I-5333 et/ou un de ses mutants et ses métabolites émis lors de sa production en tant que principe actif ; ou
- la souche isolée de *Trichoderma atroviride* TAL-17 déposée le 03 juillet 2018 à la CNCM sous le numéro CNCM I-5333 et/ou un de ses mutants en association avec au moins un autre agent de lutte biologique en tant que principe actif ; ou
- la souche isolée de *Trichoderma atroviride* TAL-17 déposée le 03 juillet 2018 à la CNCM sous le numéro CNCM I-5333 et/ou un de ses mutants et ses métabolites émis lors de la production de la souche en association avec au moins un autre agent de lutte biologique en tant que principe actif.

Selon un autre mode de réalisation, l'invention a pour objet l'utilisation telle que décrite ci-dessus d'une composition phytosanitaire dans la prévention et/ou le traitement chez un végétal d'infection provoquée par le champignon pathogène *Plasmopara viticola,* dans laquelle ladite composition phytosanitaire comprend :
- la souche isolée de *Trichoderma atroviride* TAL-17 déposée le 03 juillet 2018 à la CNCM sous le numéro CNCM I-5333 et/ou un de ses mutants en tant que principe actif ; ou
- la souche isolée de *Trichoderma atroviride* TAL-17 déposée le 03 juillet 2018 à la CNCM sous le numéro CNCM I-5333 et/ou un de ses mutants en association avec au moins un autre agent de lutte biologique en tant que principe actif,
ledit un de ses mutants étant obtenu à partir de la souche TAL-17 déposée le 03 juillet 2018 à la CNCM sous le numéro CNCM I-5333 et ledit un de ses mutants ayant les mêmes propriétés physiologiques que celles de la souche TAL-17 déposée le 03 juillet 2018 à la CNCM sous le numéro CNCM I-5333 ou des propriétés physiologiques améliorées par rapport à celle de la souche TAL-17 déposée le 03 juillet 2018 à la CNCM sous le numéro CNCM I-5333 dans la prévention et/ou le traitement d'infection chez un végétal provoquée par le champignon pathogène *Plasmopara viticola.*

Par « métabolites émis lors de la production de la souche » ou « ses métabolites émis lors de sa production », on entend toute molécule produite par la souche de l'invention et/ou un de ses mutants au cours de son développement. Ces métabolites peuvent, si nécessaire, être purifiés à partir d'un extrait de la souche de l'invention et/ou un de ses mutants (*cf.* exemple II). Par exemple et de manière non limitative, de tels métabolites peuvent être :
- des enzymes produites par le champignon telles que des protéases, des chitinases et la bêta-1,3-glucanase ; ou
- le pyrone 6-pentyl-2H-pyran-2-one (6PP).

Au sens de l'invention, il convient de noter que par « métabolites émis lors de la production de la souche », on peut entendre qu'il s'agit de l'extrait pur ou dilué de la souche de l'invention et/ou un de ses mutants (*cf.* exemple II). Selon un autre mode de réalisation, l'invention a donc pour objet l'utilisation de la souche isolée de *Trichoderma atroviride* TAL-17 déposée le 03 juillet 2018 à la CNCM sous le numéro CNCM I-5333 et/ou un de ses mutants pour produire des métabolites,
ledit un de ses mutants étant obtenu à partir de la souche TAL-17 déposée le 03 juillet 2018 à la CNCM sous le numéro CNCM I-5333 et ledit un de ses mutants ayant les mêmes propriétés physiologiques que celles de la souche TAL-17 déposée le 03 juillet 2018 à la CNCM sous le numéro CNCM I-5333 ou des propriétés physiologiques améliorées par rapport à celle de la souche TAL-17 déposée le 03 juillet 2018 à la CNCM sous le numéro CNCM I-5333 dans la prévention et/ou le traitement d'infection chez un végétal provoquée par le champignon pathogène *Plasmopara viticola.*

Par « agent de lutte biologique », on entend un microorganisme pouvant interférer avec la croissance et/ou la survie des agents pathogènes permettant ainsi de les contrôler. La souche de l'invention TAL-17 (déposée le 03 juillet 2018 à la CNCM sous le numéro CNCM I-5333) en est un exemple, mais au sens de l'invention il s'agit ici de combiner la souche de l'invention et/ou un de ses mutants à au moins un autre agent de lutte biologique, lequel est donc différent de la souche de l'invention et/ou un de ses mutants.

Par « au moins un autre agent de lutte biologique », on entend que la composition phytosanitaire de l'invention peut contenir 2 agents de lutte biologique (celui de l'invention et un autre), tout comme elle peut en contenir 3, 4 ou 5 (celui de l'invention et 2, 3 ou 4 autres).

Selon un autre mode de réalisation, l'invention a pour objet l'utilisation telle que décrite ci-dessus de la composition phytosanitaire susmentionnée, dans laquelle ladite composition phytosanitaire se présente à la base (à l'achat) sous la forme d'une composition solide ou liquide concentrée. Une telle composition solide ou liquide concentrée peut être, par exemple, obtenue grâce à une formulation particulière des spores de la souche isolée de *Trichoderma atroviride* de l'invention et/ou un de ses mutants produites par fermentation en milieu solide ou liquide, lesdites spores pouvant être sous forme purifiée ou dans la matrice de production, ladite matrice de production étant solide ou liquide.

Par « composition [...] concentrée », on entend une composition dans laquelle la concentration du principe actif *(i.e.* la souche de l'invention et/ou un de ses mutants, lesquels peuvent être sous forme de spores) est supérieure à une quantité efficace de 10⁷ spores/g de composition solide ou liquide concentrée soit 10⁷ UFC/g (UFC= unité formant colonie) de composition solide ou liquide concentrée. Aussi, un autre objet particulier de l'invention concerne l'utilisation telle que décrite ci-dessus de la composition phytosanitaire susmentionnée, dans laquelle ladite composition phytosanitaire se présente sous la forme d'une composition solide ou liquide concentrée dans laquelle la concentration du principe actif est supérieure à une quantité efficace de 10⁷ spores/g.

Par « supérieure à une quantité efficace de 10⁷ spores/g », on entend également supérieure à une quantité efficace de 10⁸ spores/g, supérieure à une quantité efficace 10⁹ spores/g, supérieure à une quantité efficace 10¹⁰ spores/g, supérieure à une quantité efficace 10¹¹ spores/g ou supérieure à une quantité efficace 10¹² spores/g.

L'utilisateur de la susdite composition doit alors, avant son utilisation, l'incorporer dans un milieu solide (*e.g.* terreau, amendements organiques, supports de culture, effluents, digestats, *etc*.) ou la mettre en suspension dans un milieu aqueux (*e.g.* eau) pour obtenir une composition diluée comprenant une quantité efficace de 10⁴ à 10¹² spores de la souche *Trichoderma atroviride* de l'invention et/ou un de ses mutants par gramme de milieu solide ou de milieu aqueux (spores/g). La composition, solide ou liquide, diluée obtenue peut alors être épandue sur les plantes dont la prévention et/ou le traitement d'une maladie fongique de plante est souhaité.

Au sens de l'Invention, l'épandage de la susdite composition comprend notamment les techniques d'épandage classiques connues de l'Homme du métier, lesquelles servent à répandre sur une zone à traiter des matières solide (*e.g.* boues d'épuration, fumier, *etc*.) ou liquide (*e.g.* pesticides, *etc*.) présentant un intérêt agronomique.

Selon un autre mode de réalisation, l'invention a pour objet l'utilisation telle que décrite ci-dessus de la composition phytosanitaire susmentionnée, dans laquelle ladite composition phytosanitaire comprend une quantité efficace de 10⁴ à 10¹² spores/g (de composition phytosanitaire), plus particulièrement de 10⁷ à 10⁹ spores/g (de composition phytosanitaire), et dans laquelle ladite composition phytosanitaire est éventuellement obtenue après une étape de préparation (*e.g.* dilution par mise en suspension ou mélange) la rendant prête à l'épandage.

Par « quantité efficace de spores/g », on entend le nombre de spores capables de former une colonie sur milieu de culture par g (gramme) de produit. De plus, l'expression « de 10⁴ à 10¹² spores/g » peut également signifier de 10⁴ à 10⁵ spores/g, de 10⁴ à 10⁶ spores/g, de 10⁴ à 10⁷ spores/g, de 10⁴ à 10⁸ spores/g, de 10⁴ à 10⁹ spores/g, de 10⁴ à 10¹⁰ spores/g, de 10⁴ à 10¹¹ spores/g, de 10⁵ à 10⁶ spores/g, de 10⁵ à 10⁷ spores/g, de 10⁵ à 10⁸ spores/g, de 10⁵ à 10⁹ spores/g, de 10⁵ à 10¹⁰ spores/g, de 10⁵ à 10¹¹ spores/g, de 10⁵ à 10¹² spores/g, de 10⁶ à 10⁷ spores/g, de 10⁶ à 10⁸ spores/g, de 10⁶ à 10⁹ spores/g, de 10⁶ à 10¹⁰ spores/g, de 10⁶ à 10¹¹ spores/g, de 10⁶ à 10¹² spores/g, de 10⁷ à 10⁸ spores/g, de 10⁷ à 10⁹ spores/g, de 10⁷ à 10¹⁰ spores/g, de 10⁷ à 10¹¹ spores/g, de 10⁷ à 10¹² spores/g, de 10⁸ à 10⁹ spores/g, de 10⁸ à 10¹⁰ spores/g, de 10⁸ à 10¹¹ spores/g, de 10⁸ à 10¹² spores/g, de 10⁹ à 10¹⁰ spores/g, de 10⁹ à 10¹¹ spores/g, de 10⁹ à 10¹² spores/g, de 10¹⁰ à 10¹¹ spores/g, de 10¹⁰ à 10¹² spores/g ou de 10¹¹ à 10¹² spores/g.

Selon un autre mode de réalisation particulier, l'invention a pour objet l'utilisation telle que décrite ci-dessus de la composition phytosanitaire susmentionnée, dans laquelle ledit végétal est la vigne.

Selon un autre mode de réalisation particulier, l'invention a pour objet l'utilisation telle que décrite ci-dessus de la composition phytosanitaire susmentionnée, dans laquelle ladite vigne appartient à un végétal de la famille des Vitacées, et en particulier dans laquelle ladite vigne appartient à un genre choisi parmi *Parthenocissus, Ampelopsis* et *Vitis,* leurs hybrides et leurs cultivars.

Selon un autre mode de réalisation particulier, l'invention a pour objet l'utilisation telle que décrite ci-dessus de la composition phytosanitaire susmentionnée, dans laquelle ladite vigne appartient au un genre *Vitis,* ses hybrides et ses cultivars, et en particulier dans laquelle ladite vigne appartient à une espèce choisie parmi *Vitis labrusca, Vitis riparia* et *Vitis vinifera,* leurs hybrides et leurs cultivars.

Avantageusement, l'invention a pour objet l'utilisation telle que décrite ci-dessus de la composition phytosanitaire susmentionnée, dans laquelle ladite vigne appartient à l'espèce *Vitis vinifera,* ses hybrides et ses cultivars.

Alternativement, l'invention a pour objet la composition phytosanitaire telle que décrite ci-dessus pour son utilisation dans la prévention et/ou le traitement d'infection chez un végétal provoquée par le champignon pathogène *Plasmopara viticola.* A cet égard, l'ensemble des utilisations particulières cité ci-dessus s'applique à cette alternative.

De manière intéressante, il convient de noter que parmi les modes de multiplication de la vigne, l'Homme a développé la technique dite du bouturage qui se réalise en deux temps. D'abord, sont prélevées des boutures après la chute des feuilles, puis celles-ci sont plantées (repiquées) en mars. Afin de protéger ces boutures d'une attaque du mildiou de la vigne (*i.e. Plasmopara viticola*), voire d'aider ces dernières à s'enraciner et à donner de nouveaux plants vigoureux, il est alors possible d'utiliser/d'appliquer la souche de l'invention sur ces boutures, en particulier ces boutures de vigne.

Aussi et selon un autre aspect de l'invention, celle-ci a pour objet l'utilisation d'une souche isolée de *Trichoderma atroviride* pour favoriser l'enracinement et/ou la croissance d'une bouture de végétal, ladite souche isolée de *Trichoderma atroviride* étant la souche TAL-17 déposée le 03 juillet 2018 à la CNCM sous le numéro CNCM I-5333 et/ou un de ses mutants, ledit un de ses mutants étant obtenu à partir de la souche TAL-17 déposée le 03 juillet 2018 à la CNCM sous le numéro CNCM I-5333 et ledit un de ses mutants ayant les mêmes propriétés physiologiques que celles de la souche TAL-17 déposée le 03 juillet 2018 à la CNCM sous le numéro CNCM I-5333 ou des propriétés physiologiques améliorées par rapport à celle de la souche TAL-17 déposée le 03 juillet 2018 à la CNCM sous le numéro CNCM I-5333 dans la prévention et/ou le traitement d'infection chez un végétal provoquée par le champignon pathogène *Plasmopara viticola,*
et dans laquelle ladite bouture de végétal est en particulier une bouture de vigne.

Par « favoriser l'enracinement et/ou la croissance », on entend, que l'utilisation d'une souche isolée de *Trichoderma atroviride* telle que décrite ci-dessus permet soit de favoriser l'enracinement d'une bouture de végétal, soit de favoriser la croissance d'une bouture de végétal, soit de favoriser l'enracinement et la croissance d'une bouture de végétal. Autrement dit, l'invention a également pour objet :
- l'utilisation d'une souche isolée de *Trichoderma atroviride* pour favoriser l'enracinement d'une bouture de végétal, ladite souche isolée de *Trichoderma atroviride* étant la souche TAL-17 déposée le 03 juillet 2018 à la CNCM sous le numéro CNCM I-5333 et/ou un de ses mutants, et dans laquelle ladite bouture de végétal est en particulier une bouture de vigne ;
- l'utilisation d'une souche isolée de *Trichoderma atroviride* pour favoriser la croissance d'une bouture de végétal, ladite souche isolée de *Trichoderma atroviride* étant la souche TAL-17 déposée le 03 juillet 2018 à la CNCM sous le numéro CNCM I-5333 et/ou un de ses mutants, et dans laquelle ladite bouture de végétal est en particulier une bouture de vigne ; et
- l'utilisation d'une souche isolée de *Trichoderma atroviride* pour favoriser l'enracinement et la croissance d'une bouture de végétal, ladite souche isolée de *Trichoderma atroviride* étant la souche TAL-17 déposée le 03 juillet 2018 à la CNCM sous le numéro CNCM I-5333 et/ou un de ses mutants, et dans laquelle ladite bouture de végétal est en particulier une bouture de vigne.

Par « favoriser l'enracinement d'une bouture de végétal », on entend que l'utilisation de la souche de l'invention ou d'une composition de l'invention favorise la formation de racines sur la bouture et leur allongement. De cette manière, celle-ci s'ancre davantage dans le sol ou à son substrat de sorte qu'elle s'y fixe durablement.

Par « favoriser la croissance d'une bouture de végétal », on entend que l'utilisation de la souche de l'invention ou d'une composition de l'invention favorise en particulier la formation de bois, de feuille, *etc.* de sorte qu'à partir d'une bouture de végétal soit obtenue plus rapidement une plante.

Selon un autre mode de réalisation, l'invention a pour objet l'utilisation telle que décrite ci-dessus de la souche isolée de *Trichoderma atroviride* de l'invention, dans laquelle ladite bouture de vigne appartient à un végétal de la famille des Vitacées, et en particulier dans laquelle ladite bouture de vigne appartient à un genre choisi parmi *Parthenocissus, Ampelopsis* et *Vitis,* leurs hybrides et leurs cultivars.

Selon un autre mode de réalisation, l'invention a pour objet l'utilisation telle que décrite ci-dessus de la souche isolée de *Trichoderma atroviride* de l'invention, dans laquelle ladite bouture de vigne appartient au un genre *Vitis,* ses hybrides et ses cultivars, et en particulier dans laquelle ladite bouture de vigne appartient à une espèce choisie parmi *Vitis labrusca, Vitis riparia* et *Vitis vinifera,* leurs hybrides et leurs cultivars.

Avantageusement, l'invention a pour objet l'utilisation telle que décrite ci-dessus de la souche isolée de *Trichoderma atroviride* de l'invention, dans laquelle ladite bouture vigne appartient à l'espèce *Vitis vinifera,* ses hybrides et ses cultivars.

Concernant cet aspect particulier, il convient de noter que l'aide à l'enracinement permet avantageusement et en même temps la prévention et/ou le traitement de maladies fongiques au moment du repiquage. Le développement d'une maladie après le repiquage est ainsi évité et le rendement est optimisé *via* l'aspect biostimulant de la souche de l'invention.

En conséquence, on comprend qu'un des objets de l'invention concerne une composition phytosanitaire d'enrobage comprenant la souche isolée de *Trichoderma atroviride* de l'invention et/ou un de ses mutants, et éventuellement au moins un agent de fixation, ladite composition phytosanitaire d'enrobage permettant de produire une bouture enrobée et en particulier une bouture de vigne enrobée. L'invention a donc pour objet aussi bien une composition phytosanitaire d'enrobage comprenant la souche isolée de *Trichoderma atroviride* de l'invention et/ou un de ses mutants, ladite composition phytosanitaire d'enrobage permettant de produire une bouture enrobée ; qu'une composition phytosanitaire d'enrobage comprenant la souche isolée de *Trichoderma atroviride* de l'invention et/ou un de ses mutants, et au moins un agent de fixation, ladite composition phytosanitaire d'enrobage permettant de produire une bouture enrobée.

On comprend également qu'un autre des objets de l'invention concerne l'utilisation d'une composition phytosanitaire (d'enrobage) pour favoriser l'enracinement d'une bouture de végétal. En particulier, l'invention a également pour objet l'utilisation telle que décrite ci-dessus d'une des compositions phytosanitaires de l'invention (*cf. supra*). Alternativement, cet objet de l'invention concerne une composition phytosanitaire (d'enrobage) pour favoriser l'enracinement d'une bouture de végétal.

Selon un autre mode de réalisation, est décrite une bouture enrobée comprenant une bouture de végétal, dans laquelle ladite bouture de végétal est en particulier une bouture de vigne, et dans laquelle ladite bouture de végétal est enrobée par une composition phytosanitaire d'enrobage comprenant :
- la souche isolée de *Trichoderma atroviride* TAL-17 déposée le 03 juillet 2018 à la CNCM sous le numéro CNCM I-5333 et/ou un de ses mutants en tant que principe actif, et éventuellement au moins un agent de fixation ; ou
- les métabolites émis lors de la production de la souche isolée de *Trichoderma atroviride* TAL-17 déposée le 03 juillet 2018 à la CNCM sous le numéro CNCM I-5333 et/ou un de ses mutants en tant que principe actif, et éventuellement au moins un agent de fixation ; ou
- la souche isolée de *Trichoderma atroviride* TAL-17 déposée le 03 juillet 2018 à la CNCM sous le numéro CNCM I-5333 et/ou un de ses mutants et ses métabolites émis lors de sa production en tant que principe actif, et éventuellement au moins un agent de fixation, et éventuellement au moins un agent de fixation ; ou
- la souche isolée de *Trichoderma atroviride* TAL-17 déposée le 03 juillet 2018 à la CNCM sous le numéro CNCM I-5333 et/ou un de ses mutants en association avec au moins un autre agent de lutte biologique en tant que principe actif, et éventuellement au moins un agent de fixation ; ou
- la souche isolée de *Trichoderma atroviride* TAL-17 déposée le 03 juillet 2018 à la CNCM sous le numéro CNCM I-5333 et/ou un de ses mutants et ses métabolites émis lors de la production de la souche en association avec au moins un autre agent de lutte biologique en tant que principe actif, et éventuellement au moins un agent de fixation.

Selon un autre mode de réalisation, l'invention a pour objet une bouture enrobée telle que décrite ci-dessus comprenant une bouture de végétal, ladite bouture de végétal étant enrobée par une composition phytosanitaire d'enrobage comprenant :
- la souche isolée de *Trichoderma atroviride* TAL-17 déposée le 03 juillet 2018 à la CNCM sous le numéro CNCM I-5333 et/ou un de ses mutants en tant que principe actif, et éventuellement au moins un agent de fixation ; ou
- la souche isolée de *Trichoderma atroviride* TAL-17 déposée le 03 juillet 2018 à la CNCM sous le numéro CNCM I-5333 et/ou un de ses mutants en association avec au moins un autre agent de lutte biologique en tant que principe actif, et éventuellement au moins un agent de fixation,

ledit un de ses mutants étant obtenu à partir de la souche TAL-17 déposée le 03 juillet 2018 à la CNCM sous le numéro CNCM I-5333 et ledit un de ses mutants ayant les mêmes propriétés physiologiques que celles de la souche TAL-17 déposée le 03 juillet 2018 à la CNCM sous le numéro CNCM I-5333 ou des propriétés physiologiques améliorées par rapport à celle de la souche TAL-17 déposée le 03 juillet 2018 à la CNCM sous le numéro CNCM I-5333 dans la prévention et/ou le traitement d'infection chez un végétal provoquée par le champignon pathogène *Plasmopara viticola,*
et dans laquelle ladite bouture de végétal enrobée est en particulier une bouture de vigne

Par « bouture enrobée », on entend une bouture de végétal, en particulier une bouture de vigne, sélectionnée pour être repiquée, ladite bouture de végétal ayant subi un traitement particulier qui a permis son enrobage dans une composition phytosanitaire d'enrobage telle que décrite ci-dessus. Par « bouture de végétal », on entend un organe ou un fragment d'organe isolé *(e.g.* morceau de rameau, feuille, racine, tige, écaille de bulbe), lequel une fois repiqué possède la capacité de donner naissance à une nouvelle plante. Aussi et par « bouture de vigne », on entend plus particulièrement un sarment de vigne, c'est-à-dire le rameau vert ayant poussé dans l'année, lequel a été prélevé sur un pied de vigne et est destiné à être repiqué (planté) pour donner un nouveau pied de vigne.

Selon un autre mode de réalisation, l'invention a pour objet la bouture enrobée telle que décrite ci-dessus, dans laquelle ladite bouture de vigne appartient à un végétal de la famille des Vitacées, et en particulier dans laquelle ladite bouture de vigne appartient à un genre choisi parmi *Parthenocissus, Ampelopsis* et *Vitis,* leurs hybrides et leurs cultivars.

Selon un autre mode de réalisation, l'invention a pour objet la bouture enrobée telle que décrite ci-dessus, dans laquelle ladite bouture de vigne appartient au un genre *Vitis,* ses hybrides et ses cultivars, et en particulier dans laquelle ladite bouture de vigne appartient à une espèce choisie parmi *Vitis labrusca, Vitis riparia* et *Vitis vinifera,* leurs hybrides et leurs cultivars.

Avantageusement, l'invention a pour objet la bouture enrobée telle que décrite ci-dessus, dans laquelle ladite bouture de vigne appartient à l'espèce *Vitis vinifera,* ses hybrides et ses cultivars.

Selon un autre mode de réalisation, l'invention a pour objet la bouture enrobée telle que décrite ci-dessus, dans laquelle ladite bouture enrobée comprend une quantité efficace de 10⁵ à 10⁸ (ou de 10⁶ à 10⁷) spores/bouture enrobée, préférentiellement 10⁶ (ou 10⁷) spores/bouture enrobée.

Selon autre aspect de l'invention, celle-ci a pour objet un procédé de protection et/ou de traitement d'un végétal contre une maladie provoquée par le champignon pathogène *Plasmopara viticola* comprenant l'application d'une composition phytosanitaire sur au moins une partie dudit végétal ou du sol à proximité dudit végétal. En particulier, l'invention a pour objet le procédé tel que décrit ci-dessus, dans lequel ladite au moins une partie dudit végétal est une feuille ou un fruit.

Selon un autre mode de réalisation, est décrit un procédé de protection et/ou de traitement d'un végétal contre une maladie provoquée par le champignon pathogène *Plasmopara viticola* comprenant l'application d'une composition phytosanitaire sur au moins une partie dudit végétal ou du sol à proximité dudit végétal, ladite au moins une partie dudit végétal étant en particulier une feuille ou un fruit,
dans lequel ladite composition phytosanitaire comprend :
   - la souche isolée de *Trichoderma atroviride* TAL-17 déposée le 03 juillet 2018 à la CNCM sous le numéro CNCM I-5333 et/ou un de ses mutants en tant que principe actif ; ou
   - les métabolites émis lors de la production la souche isolée de *Trichoderma atroviride* TAL-17 déposée le 03 juillet 2018 à la CNCM sous le numéro CNCM I-5333 et/ou un de ses mutants en tant que principe actif ; ou
   - la souche isolée de *Trichoderma atroviride* TAL-17 déposée le 03 juillet 2018 à la CNCM sous le numéro CNCM I-5333 et/ou un de ses mutants et ses métabolites émis lors de sa production en tant que principe actif ; ou
   - la souche isolée de *Trichoderma atroviride* TAL-17 déposée le 03 juillet 2018 à la CNCM sous le numéro CNCM I-5333 et/ou un de ses mutants en association avec au moins un autre agent de lutte biologique en tant que principe actif ; ou
   - la souche isolée de *Trichoderma atroviride* TAL-17 déposée le 03 juillet 2018 à la CNCM sous le numéro CNCM I-5333 et/ou un de ses mutants et ses métabolites émis lors de la production de la souche en association avec au moins un autre agent de lutte biologique en tant que principe actif,
et dans lequel ledit végétal est en particulier la vigne.

Selon un autre mode de réalisation, l'invention a pour objet un procédé tel que décrit ci-dessus de protection et/ou de traitement d'un végétal contre une maladie provoquée par le champignon pathogène *Plasmopara viticola* comprenant l'application d'une composition phytosanitaire sur au moins une partie dudit végétal ou du sol à proximité dudit végétal, ladite au moins une partie dudit végétal étant en particulier une feuille ou un fruit,
dans lequel ladite composition phytosanitaire comprend :
   - la souche isolée de *Trichoderma atroviride* TAL-17 déposée le 03 juillet 2018 à la CNCM sous le numéro CNCM I-5333 et/ou un de ses mutants en tant que principe actif ; ou
   - la souche isolée de *Trichoderma atroviride* TAL-17 déposée le 03 juillet 2018 à la CNCM sous le numéro CNCM I-5333 et/ou un de ses mutants en association avec au moins un autre agent de lutte biologique en tant que principe actif,
ledit un de ses mutants étant obtenu à partir de la souche TAL-17 déposée le 03 juillet 2018 à la CNCM sous le numéro CNCM I-5333 et ledit un de ses mutants ayant les mêmes propriétés physiologiques que celles de la souche TAL-17 déposée le 03 juillet 2018 à la CNCM sous le numéro CNCM I-5333 ou des propriétés physiologiques améliorées par rapport à celle de la souche TAL-17 déposée le 03 juillet 2018 à la CNCM sous le numéro CNCM I-5333 dans la prévention et/ou le traitement d'infection chez un végétal provoquée par le champignon pathogène *Plasmopara viticola,*
et dans lequel ledit végétal est en particulier la vigne

Par « protection et/ou de traitement d'un végétal contre une maladie », on entend, que le procédé tel que décrit ci-dessus permet soit de protéger un végétal contre une maladie, soit de traiter un végétal d'une maladie, soit de protéger et de traiter un végétal contre une maladie.

Par « protection d'un végétal contre une maladie », on entend que le procédé de l'invention a pour objectif de prévenir l'apparition d'une maladie en étant préférablement mis en œuvre avant la colonisation dudit végétal par un phytopathogène (*e.g. Plasmopara viticola*) ou l'apparition des symptômes qu'il provoque.

Par « traitement d'un végétal contre une maladie », on entend que le procédé de l'invention a pour objectif de traiter (soigner) une maladie apparue sur un végétal en étant mis en œuvre préférentiellement dès la colonisation dudit végétal par un phytopathogène (*e.g. Plasmopara viticola*) ou dès l'apparition des symptômes qu'il provoque.

Par « *Plasmopara viticola* », on entend l'agent pathogène responsable du mildiou de la vigne et avantageusement, l'invention a pour objet le procédé tel que décrit ci-dessus, dans lequel ladite maladie est le mildiou de la vigne. Avantageusement, l'invention a également pour objet le procédé tel que décrit ci-dessus, dans lequel ledit végétal est la vigne.

Selon un autre mode de réalisation, l'invention a pour objet le procédé tel que décrit ci-dessus, dans lequel ladite vigne appartient à un végétal de la famille des Vitacées, et en particulier dans lequel ladite vigne appartient à un genre choisi parmi *Parthenocissus, Ampelopsis* et *Vitis,* leurs hybrides et leurs cultivars.

Selon un autre mode de réalisation particulier, l'invention a pour objet le procédé tel que décrit ci-dessus, dans lequel ladite vigne appartient au un genre *Vitis,* ses hybrides et ses cultivars, et en particulier dans lequel ladite vigne appartient à une espèce choisie parmi *Vitis labrusca, Vitis riparia* et *Vitis vinifera,* leurs hybrides et leurs cultivars.

Avantageusement, l'invention a pour objet le procédé tel que décrit ci-dessus, dans lequel ladite vigne appartient à l'espèce *Vitis vinifera,* ses hybrides et ses cultivars.

Dans la mesure où cet aspect comprend l'application d'une composition phytosanitaire, laquelle a par ailleurs été décrite précédemment au travers d'une utilisation de celle-ci, il est important de noter que l'ensemble des caractéristiques particulières susmentionné s'applique à cet aspect. De fait, l'invention a notamment pour objet le procédé tel que décrit ci-dessus, dans lequel ladite composition phytosanitaire comprend une quantité efficace de 10⁴ à 10¹² spores/g (de composition phytosanitaire), plus particulièrement de 10⁷ à 10⁹ spores/g (de composition phytosanitaire),
et dans laquelle ladite composition phytosanitaire est éventuellement obtenue après une étape de préparation (*e.g.* dilution par mise en suspension ou mélange) la rendant prête à l'application (*e.g.* épandage).

Selon un autre mode de réalisation, l'invention a donc pour objet le procédé tel que décrit ci-dessus, dans lequel ladite composition phytosanitaire est épandue
- à raison de 10 à 500 L/ha, en particulier de 50 à 250 L/ha, notamment pour la pulvérisation aérienne ; ou
- à raison d'une quantité efficace de 10¹⁰ à 10¹⁴ spores/ha, en particulier de 10¹⁰ à 10¹² spores/ha, notamment pour les épandages aériens de type pulvérisation foliaire.

L'expression « de 10 à 500 L/ha (litre/hectare) » signifie également de 10 à 400 L/ha, de 10 à 300 L/ha, de 10 à 200 L/ha, de 10 à 100 L/ha, de 100 à 500 L/ha, de 200 à 500 L/ha, de 300 à 500 L/ha, de 400 à 500 L/ha, de 50 à 500 L/ha, de 50 à 250 L/ha ou de 250 à 500 L/ha. L'expression « de 10¹⁰ à 10¹⁴ spores/ha » signifie également de 10¹⁰ à 10¹¹ spores/ha, de 10¹⁰ à 10¹² spores/ha, de 10¹⁰ à 10¹³ spores/ha, de 10¹¹ à 10¹² spores/ha, de 10¹¹ à 10¹³ spores/ha, de 10¹¹ à 10¹⁴ spores/ha, de 10¹² à 10¹³ spores/ha, de 10¹² à 10¹⁴ spores/ha ou de 10¹³ à 10¹⁴ spores/ha.

Selon un autre mode de réalisation, l'invention a pour objet le procédé tel que décrit ci-dessus, dans lequel
- la protection dudit végétal comprend une application préventive au niveau du sol de ladite composition phytosanitaire avec l'apport d'amendement ou du support organique :
   ∘ avant le semis d'une graine dudit végétal, ou
   ∘ avant le repiquage d'une bouture dudit végétal ;
      et/ou
- la protection dudit végétal comprend une étape d'application de ladite composition phytosanitaire :
   ∘ sur une graine dudit végétal (*e.g.* obtention d'une semence enrobée) et/ou son environnement avant que ladite graine soit semée, ou
   ∘ sur une bouture dudit végétal (*e.g.* obtention bouture enrobée) et/ou son environnement avant que ladite bouture soit repiquée ;
      et/ou
- le traitement dudit végétal comprend une étape de pulvérisation de ladite composition phytosanitaire aux cours de différents stades phénologiques de la plante (en prévention d'un risque d'infection dudit champignon pathogène de l'ensemble ou une partie de la plante).

Par « semence enrobée », on entend, à l'image d'une bouture enrobée (*cf. supra*), une graine de végétal enrobée par une composition phytosanitaire de l'invention. A cet égard, il convient de noter qu'un aspect de l'invention a pour objet une semence enrobée comprenant une graine de végétal, en particulier une graine de vigne. Un autre aspect de l'invention concerne l'utilisation d'une souche isolée de *Trichoderma atroviride* de l'invention pour favoriser la germination et/ou la croissance d'une graine de végétal, en particulier une graine de vigne.

Par « son environnement », on entend l'environnement *(i.e.* le sol) à l'endroit et à proximité du lieu du semis d'une graine de végétal ou du repiquage d'une bouture de végétal, ledit végétal étant en particulier la vigne. De ce fait, en mettant en œuvre le procédé de l'invention tel que décrit ci-dessus, la présence de la souche TAL-17 et/ou un de ses mutants assurera la prévention vis-à-vis de la pression de ou des vecteurs des maladies potentiellement présents dans la rhizosphère.

Par « différents stades phénologiques », on entend de la graine jusqu'à la floraison (BBCH0 à BBCH99 selon l'échelle BBCH des stades phénologiques de la vigne (Feller et al., 1995 - Phänologische entwicklungsstadien von gemüsepflanzen: II. Fruchtgemüse und hülsenfrüchte ; Nachrichtenbl. Deut. Pflanzenschutzd / Lorenz et al., 1994 - Echelle BBCH, stades principaux et secondaires, pour la vigne).

Selon un autre mode de réalisation, l'invention a pour objet le procédé tel que décrit ci-dessus, dans lequel
- la protection dudit végétal comprend une application préventive au niveau du sol de ladite composition phytosanitaire avec l'apport d'amendement ou du support organique avant le semis d'une graine dudit végétal ;
   et/ou
- la protection dudit végétal comprend une étape d'application de ladite composition phytosanitaire sur une graine dudit végétal (*e.g.* obtention d'une semence enrobée) et/ou son environnement avant que ladite graine soit semée ;
   et/ou
- le traitement dudit végétal comprend une étape de pulvérisation de ladite composition phytosanitaire aux cours de différents stades phénologiques de la plante (en prévention d'un risque d'infection dudit champignon pathogène de l'ensemble ou une partie de la plante).

Selon un autre mode de réalisation, l'invention a pour objet le procédé tel que décrit ci-dessus, dans lequel
- la protection dudit végétal comprend une application préventive au niveau du sol de ladite composition phytosanitaire avec l'apport d'amendement ou du support organique avant le repiquage d'une bouture dudit végétal ;
   et/ou
- la protection dudit végétal comprend une étape d'application de ladite composition phytosanitaire sur une bouture dudit végétal (*e.g.* obtention bouture enrobée) et/ou son environnement avant que ladite bouture soit repiquée ;
   et/ou
- le traitement dudit végétal comprend une étape de pulvérisation de ladite composition phytosanitaire aux cours de différents stades phénologiques de la plante (en prévention d'un risque d'infection dudit champignon pathogène de l'ensemble ou une partie de la plante).

A tout égard, il convient de noter que les différents aspects de l'invention, tout comme les différents modes de réalisation de celle-ci sont interdépendants. Ces derniers peuvent donc être combinés entre eux à foison pour obtenir des aspects et/ou des modes de réalisation préférés de l'invention non explicitement décrits. Ceci est également valable pour l'ensemble des définitions fourni dans la présente description, lequel s'applique à tous les aspects de l'invention et ses modes de réalisation.

En outre, la présente invention est illustrée, sans toutefois s'y limiter, par les Figures et Exemples suivants.

### LISTE DES FIGURES

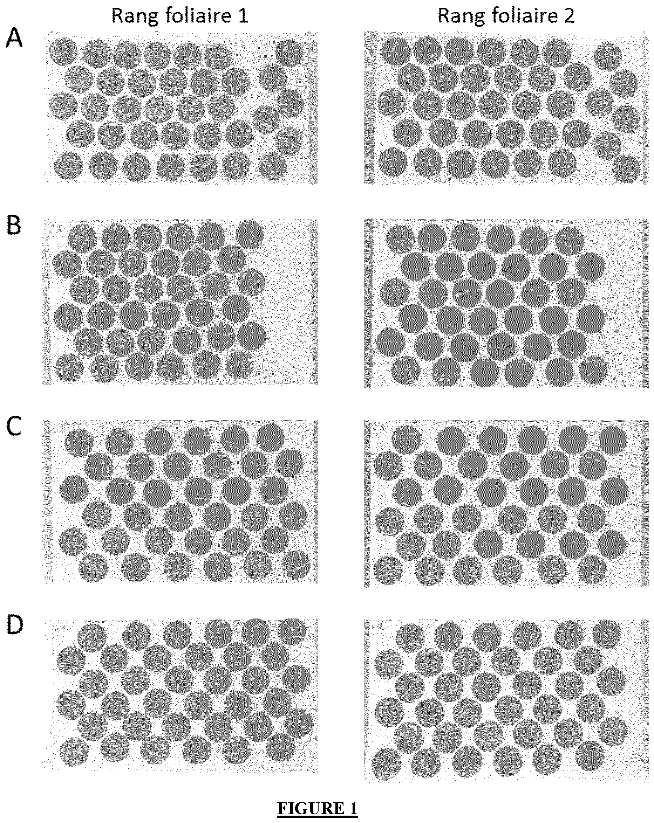

La **Figure 1** représente un ensemble de photographie des disques de feuille de vignes prélevées à l'emporte-pièce à 7 jours post-inoculation. Le traitement de chaque lot de 36 disques est illustré comme suit :
   (A) Traitement eau, rang foliaire 1 à gauche et rang foliaire 2 à droite ;
   (B) Souche TAL-17 concentrée, rang foliaire 1 à gauche et rang foliaire 2 à droite ;
   (C) Souche TAL-17 diluée, rang foliaire 1 à gauche et rang foliaire 2 à droite ; et
   (D) Extrait de production de la souche TAL-17, rang foliaire 1 à gauche et rang foliaire 2 à droite.

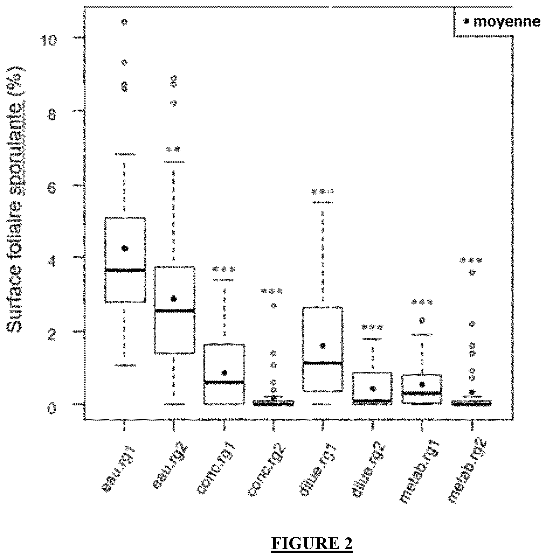

La **Figure** 2 illustre les effets des différents traitements sur la sporulation du mildiou sur des boutures de vigne (estimation en % par analyse d'images) sous forme d'histogramme.

Abréviations : Eau (témoin eau) ; conc (TAL-17 concentrée) ; dilué (TAL-17) diluée ; métab (Extrait TAL-17) et rg (rang foliaire).
*p-value* : 0 < *** < 0,001 < ** < 0,01 < * < 0,05 < ns < 0,1

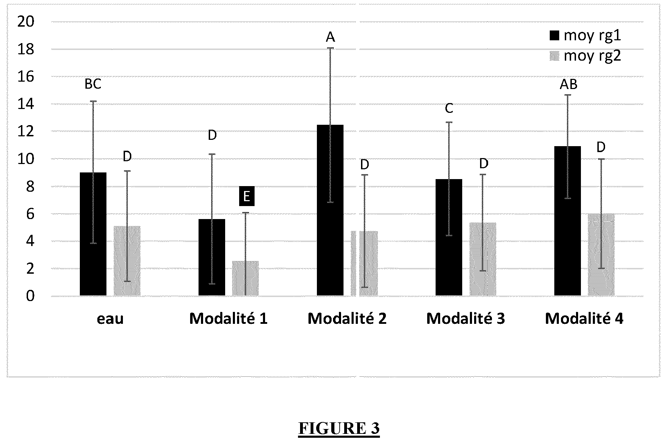

La **Figure 3** illustre les effets des différents traitements sur la sporulation du mildiou sur des boutures de vigne (estimation en % par analyse d'images) sous forme d'histogramme. Pour chaque indicateur mesuré, une ANOVA a été réalisée à l'aide du logiciel XLSTAT 2021.5.1 (ANOVA). Les hypothèses de validité de l'ANOVA ont été vérifiées pour la normalité des résidus par le test de SHAPIRO-WILK et pour l'homogénéité des variances par le test de Levène. Le test de comparaison des moyennes (test Student Newman Keuls) a ensuite été réalisé pour chaque paramètre mesuré et pour lequel l'ANOVA montre un effet significatif au seuil de 5%. Le résultat de ce test permet de constituer les groupes statistiquement homogènes (groupe A, AB...).

Abréviations : eau = Témoin ; Modalité 1 = Souche *Trichoderma atroviride* (TAL-17) ; Modalité 2 = *Trichoderma atroviride* CERBIO (collection interne ARD) ; Modalité 3 = VINTEC ; Modalité 4 = ESQUIVE ; moy = moyenne ; rg = rang foliaire.

### EXEMPLES

### (I) Isolement de la souche de Trichoderma atroviride TAL-17

Souche isolée d'une feuille de blé cultivé en champs.

Le prélèvement de feuille de la culture du blé a été broyé puis mis au contact en infiniment mélangé d'une gélose de PDA (*Potato Dextrose Agar*) à 50°C qui contient des spores de *Fusarium graminearum.* La boîte a été mise en culture à 25°C sous hotte lumineuse. Ainsi seules les souches étant capables de se reproduire en présence de *Fusarium graminearum* se sont développées sur la boîte. Parmi ces souches TAL-17 était présente. Un prélèvement spécifique d'une zone présentant un intérêt dans la boîte et plusieurs repiquages successifs ont permis d'isoler la souche TAL-17, laquelle a ensuite été déposée le 03 juillet 2018 à la Collection Nationale de Cultures de Microorganismes (CNCM ; Institut Pasteur, 25-28 rue du Docteur Roux, F-75724 PARIS CEDEX 15) sous le numéro CNCM I-5333.

### (II) Préparation d'un extrait de la souche TAL-17

La souche TAL-17 a été cultivée sur milieu solide et sur boîte de Pétri PDA (*Potato Dextrose Agar*). Après 10 jours de culture à 25°C sous hotte lumineuse, les colonies de TAL-17 ont été récupérées et un extrait a été préparé.

Pour cela, 10 mL d'une eau stérile (eau stérile de nappe phréatique avec ions NaCl) ont été ajoutés à la surface de la gélose et la gélose a été raclée pour mettre en suspension les colonies de TAL-17. Cette suspension a ensuite été aspirée et deux lavages ont été effectués (1^{ère} centrifugation (10 min ; 4 500 rpm) - remplacement du surnageant par un même volume de NaCl stérile - 2^{nd} centrifugation (10 min ; 4 500 rpm)). A l'issue de ces lavages, la solution obtenue a été placée en agitation 16h à 70 rpm. Après l'agitation, la solution a été centrifugée 10 min à 4 500 rpm puis filtrée (filtre seringue 0,22 µM).

Le filtrat obtenu correspond à « l'extrait pur de production » de la souche TAL-17, lequel en contient notamment les métabolites de production.

### (III) Etude de l'efficacité de la souche TAL-17 comme potentiel agent de biocontrôle contre le mildiou de la vigne en serre

### Protocole

Dans le cadre de cet essai, quatre modalités comprenant 6 plantes chacune ont été étudiées :
A. Contrôle : eau ;
B. Modalité 1 : application d'une bouillie de traitement sur feuille à 2x10⁶ UFC/mL + 0,5% Appyphyt obtenue à partir d'une solution concentrée à 2x10¹² UFC/ha de spores de TAL-17 ;
C. Modalité 2 : application d'une bouillie de traitement sur feuille à 2x10⁴ UFC/mL + 0,5% Appyphyt obtenue à partir d'une solution concentrée à 2x10¹⁰ UFC/ha de spores de TAL-17 ;
D. Modalité 3 : application d'un « Extrait pur de production » de TAL-17 *(cf.* exemple VIII) + 0,5% Appyphyt.

Le traitement a été apporté en pulvérisation manuelle, en delà du point de ruissellement sur les 2 faces des feuilles. Après 48h de traitement, l'apport de la souche fongique responsable du mildiou a été effectué par pulvérisation d'une suspension de sporanges de *Plasmopara viticola* (10⁴ sporanges/mL) sur la face inférieure des feuilles. Après 3h en chambre humide des plants de vigne traités, les plantes ont ensuite été placées 5 jours en serre. Cinq jours après inoculation, 6 disques de 1,3 cm de diamètre ont été prélevés par feuille, par rang et par plante à l'emporte-pièce et disposés aussitôt face adaxiale sur un papier humide, en boîte plexiglas. Cette dernière a été laissée 2 jours dans une chambre de culture (jour 10h 20°C / nuit 14h 18°C) pour permettre la sporulation.

### Résultats

Les résultats correspondent au pourcentage de surface de disque couverte par les sporangiophores, déterminé par analyse d'image. En particulier, la Figure 1 montre l'ensemble des disques des rangs 1 (colonne de gauche) et 2 (colonne de droite) notés au moment du traitement à 7 jours post-inoculation. La sporulation est bien visible sur les contrôles eau (A) comme le confirme l'évaluation de l'effet des différents traitements sur la sporulation du mildiou (*cf.* Figure 2) dont les valeurs des moyennes et écart-types de chaque traitement, et rang foliaire sont regroupées dans le Tableau 3 ci-après.

**Tableau 3. Effet de la souche TAL-17 sur l'évolution du mildiou de la vigne**

| **Modalité :** | **A** | | **B** | | **C** | | **D** | |
|---|---|---|---|---|---|---|---|---|
| | **Contrôle (eau)** | | **TAL-17 concentrée** | | **TAL-17 diluée** | | **Extrait de TAL-17** | |
| **Rang :** | Rang 1 | Rang 2 | Rang 1 | Rang 2 | Rang 1 | Rang 2 | Rang 1 | Rang 2 |
| **Moyenne** | 4,24 | 2,91 | 0,87 | 0,19 | 1,60 | 0,43 | 0,53 | 0,32 |
| **Ecart-type** | 2,28 | 2,32 | 0,98 | 0,52 | 1,50 | 0,53 | 0,56 | 0,75 |
| **Moyenne rg 1+2** | 3,58 | | 0,53 | | 1,01 | | 0,42 | |
| **Ecart-type rg 1+2** | 2,41 | | 0,86 | | 1,28 | | 0,67 | |

La mesure a été effectuée sur 6 disques/feuille/rang pour 6 plantes/modalité. Pour chaque modalité, n = 6 plantes et les valeurs de pourcentage d'infection indiquées ci-dessus correspondent à la moyenne des valeurs obtenues pour 36 disques de « rang 1 » ou 36 disques de « rang 2 ».

A cet égard, il convient de noter que le taux de contamination du contrôle eau (A) est normal, attestant de l'efficacité de la contamination donc validant l'expérimentation. De fait, ces résultats démontrent que les 3 traitements à base de la souche TAL-17 ou d'un extrait de celle-ci protègent contre le mildiou, En particulier, les traitements TAL-17 concentrée (B) et extrait de TAL-17 (D) sont les plus efficaces. A noter également que des valeurs plus faibles sont observées sur les rangs foliaire 2 de chaque traitement, ceci étant expliqué par la résistance ontogénique des feuilles.

### Conclusion

Les traitements testés, sous forme TAL-17 concentrée, diluée ou extrait pur de production de TAL-17, présentent tous une efficacité pour limiter le développement de *Plasmopara viticola,* de façon significative par rapport au contrôle eau.

### (IV) Etude de l'efficacité de la souche TAL-17 comme agent de biocontrôle contre le mildiou de la vigne en serre en comparaison à 3 autres souches de Trichoderma atroviride (souche CERBIO et deux produits de biocontrôle commerciaux)

### Protocole

Dans le cadre de cet essai, cinq modalités comprenant 6 plantes chacune ont été étudiées :
A. Contrôle : eau ;
B. Modalité 1 : application d'une bouillie de traitement sur feuille à 3x10⁸ UFC/mL + 0,5% Appyphyt obtenue à partir de spores de TAL-17 en production de type fermentation solide (dilution des spores dans du PDB ½ puis agitation une nuit avant traitement afin de relancer la croissance des spores et du mycélium ainsi que la production des métabolites secondaires) ;
C. Modalité 2 : application d'une bouillie de traitement sur feuille à 3x10⁸ UFC/mL + 0,5% Appyphyt obtenue à partir de spores de la souche *Trichoderma atroviride* CERBIO issues d'une croissance sur PDA (dilution des spores dans du PDB ½ puis agitation une nuit avant traitement afin de relancer la croissance des spores et du mycélium ainsi que la production des métabolites secondaires)
D. Modalité 3 : Produit VINTEC^{®} (numéro d'AMM est le 2169998, souche *Trichoderma atroviride* SC1) à la dose homologuée (0,2 kg/ha dans une bouillie de 500 L/ha)
E. Modalité 4: Produit ESQUIVE^{®} (numéro d'AMM est le 2080004, souche *Trichoderma atroviride* I-1237) à la dose homologuée (4 kg/ha dans une bouillie de 500 L/ha)

Le traitement a été apporté en pulvérisation manuelle, en delà du point de ruissellement sur les 2 faces des feuilles (10 mL/plant). Après 48h de traitement, l'apport de la souche fongique responsable du mildiou a été effectué par pulvérisation d'une suspension de sporanges de *Plasmopara viticola* (10⁴ sporanges/mL) sur la face inférieure des feuilles. Après 3h en chambre humide des plants de vigne traités, les plantes ont ensuite été placées 5 jours en serre. Cinq jours après inoculation, 6 disques de 1,3 cm de diamètre ont été prélevés par feuille, par rang et par plante à l'emporte-pièce et disposés aussitôt face adaxiale sur un papier humide, en boîte plexiglas. Cette dernière a été laissée 2 jours dans une chambre de culture (jour 10h 20°C / nuit 14h 18°C) pour permettre la sporulation.

### Résultats

Les résultats correspondent au pourcentage de surface de disque couverte par les sporangiophores, déterminé par analyse d'image. L'évaluation de l'effet des différents traitements sur la sporulation du mildiou est effectuée en comparant les valeurs des moyennes et écart-types de chaque traitement, et les résultats sont regroupés dans le Tableau 4 ci-après.

**Tableau 4. Effet de la souche TAL-17 sur l'évolution du mildiou de la vigne**

| **Modalité :** | | **Rang :** | **Moyenne** | **Ecart-type** |
|---|---|---|---|---|
| **A** | **Contrôle (eau)** | Rang 1 | 9,03 | 5,17 |
| | | Rang 2 | 5,1 | 4,02 |
| **B** | **TAL-17** | Rang 1 | 5,63 | 4,73 |
| | | Rang 2 | 2,56 | 3,53 |
| **C** | **CERBIO** | Rang 1 | 12,47 | 5,62 |
| | | Rang 2 | 4,74 | 4,1 |
| **D** | **VINTEC^{®}** | Rang 1 | 8,53 | 4,13 |
| | | Rang 2 | 5,35 | 3,52 |
| **E** | **ESQUIVE^{®}** | Rang 1 | 10,91 | 3,76 |
| | | Rang 2 | 6 | 3,99 |

La mesure a été effectuée sur 6 disques/feuille/rang pour 6 plantes/modalité. Pour chaque modalité, n = 6 plantes et les valeurs de pourcentage d'infection indiquées ci-dessus correspondent à la moyenne des valeurs obtenues pour 36 disques de « rang 1 » ou 36 disques de « rang 2 ».

A cet égard, il convient de noter que le taux de contamination du contrôle eau (A) est normal, attestant de l'efficacité de la contamination donc validant l'expérimentation. De fait, ces résultats démontrent que les traitements à base de la souche TAL-17 protège contre le mildiou. Les modalités CERBIO, ESQUIVE^{®} et VINTEC^{®} n'ont pas démonter d'efficacité statistiquement différente du témoin et ceci pour les deux rangs.

En revanche, les résultats montrent que la souche TAL-17 réduit la sporulation du mildiou de la vigne (*cf.* Figure 3). En effet, en considérant le pourcentage de sporulation du mildiou pour chaque rang (1 et 2), les analyses statistiques ont montré que la souche TAL-17 a induit une réduction significative de la sporulation du mildiou comparativement au témoin et aux différents traitements (*cf.* Figure 3). A noter également que des valeurs plus faibles sont observées sur les rangs foliaire 2 de chaque traitement, ceci étant expliqué par la résistance ontogénique des feuilles.

### Conclusion

Le traitement testé avec TAL-17 présente une efficacité pour limiter le développement de *Plasmopara viticola.*

## Revendications

1. Utilisation d'une souche isolée de *Trichoderma atroviride* dans la prévention et/ou le traitement d'infection chez un végétal provoquée par le champignon pathogène *Plasmopara viticola,*
ladite souche isolée de *Trichoderma atroviride* étant la souche TAL-17 déposée le 03 juillet 2018 à la CNCM sous le numéro CNCM I-5333 et/ou un de ses mutants,
ledit un de ses mutants étant obtenu à partir de la souche TAL-17 déposée le 03 juillet 2018 à la CNCM sous le numéro CNCM I-5333 et ledit un de ses mutants ayant les mêmes propriétés physiologiques que celles de la souche TAL-17 déposée le 03 juillet 2018 à la CNCM sous le numéro CNCM I-5333 ou des propriétés physiologiques améliorées par rapport à celle de la souche TAL-17 déposée le 03 juillet 2018 à la CNCM sous le numéro CNCM I-5333 dans la prévention et/ou le traitement d'infection chez un végétal provoquée par le champignon pathogène *Plasmopara viticola.*

2. Utilisation d'une souche isolée de *Trichoderma atroviride* selon la revendication 1, dans laquelle ledit végétal est la vigne,
et en particulier dans laquelle ladite vigne appartient à un végétal de la famille des Vitacées notamment choisi parmi les genres *Parthenocissus, Ampelopsis* et *Vitis,* leurs hybrides et leurs cultivars.

3. Utilisation d'une composition phytosanitaire dans la prévention et/ou le traitement chez un végétal d'infection provoquée par le champignon pathogène *Plasmopara viticola,* dans laquelle ladite composition phytosanitaire comprend :
- la souche isolée de *Trichoderma atroviride* TAL-17 déposée le 03 juillet 2018 à la CNCM sous le numéro CNCM I-5333 et/ou un de ses mutants en tant que principe actif ; ou
- la souche isolée de *Trichoderma atroviride* TAL-17 déposée le 03 juillet 2018 à la CNCM sous le numéro CNCM I-5333 et/ou un de ses mutants en association avec au moins un autre agent de lutte biologique en tant que principe actif,
ledit un de ses mutants étant obtenu à partir de la souche TAL-17 déposée le 03 juillet 2018 à la CNCM sous le numéro CNCM I-5333 et ledit un de ses mutants ayant les mêmes propriétés physiologiques que celles de la souche TAL-17 déposée le 03 juillet 2018 à la CNCM sous le numéro CNCM I-5333 ou des propriétés physiologiques améliorées par rapport à celle de la souche TAL-17 déposée le 03 juillet 2018 à la CNCM sous le numéro CNCM I-5333 dans la prévention et/ou le traitement d'infection chez un végétal provoquée par le champignon pathogène *Plasmopara viticola.*

4. Utilisation d'une composition phytosanitaire selon la revendication 3, dans laquelle ladite composition phytosanitaire comprend une quantité efficace de 10⁴ à 10¹² spores/g, plus particulièrement de 10⁷ à 10⁹ spores/g,
et dans laquelle ladite composition phytosanitaire est éventuellement obtenue après une étape de préparation la rendant prête à l'épandage.

5. Utilisation d'une souche isolée de *Trichoderma atroviride* pour favoriser l'enracinement et/ou la croissance d'une bouture de végétal, ladite souche isolée de *Trichoderma atroviride* étant la souche TAL-17 déposée le 03 juillet 2018 à la CNCM sous le numéro CNCM I-5333 et/ou un de ses mutants,
ledit un de ses mutants étant obtenu à partir de la souche TAL-17 déposée le 03 juillet 2018 à la CNCM sous le numéro CNCM I-5333 et ledit un de ses mutants ayant les mêmes propriétés physiologiques que celles de la souche TAL-17 déposée le 03 juillet 2018 à la CNCM sous le numéro CNCM I-5333 ou des propriétés physiologiques améliorées par rapport à celle de la souche TAL-17 déposée le 03 juillet 2018 à la CNCM sous le numéro CNCM I-5333 dans la prévention et/ou le traitement d'infection chez un végétal provoquée par le champignon pathogène *Plasmopara viticola,*
et dans laquelle ladite bouture de végétal est en particulier une bouture de vigne.

6. Bouture enrobée comprenant une bouture de végétal, ladite bouture de végétal étant enrobée par une composition phytosanitaire d'enrobage comprenant :
- la souche isolée de *Trichoderma atroviride* TAL-17 déposée le 03 juillet 2018 à la CNCM sous le numéro CNCM I-5333 et/ou un de ses mutants en tant que principe actif, et éventuellement au moins un agent de fixation ; ou
- la souche isolée de *Trichoderma atroviride* TAL-17 déposée le 03 juillet 2018 à la CNCM sous le numéro CNCM I-5333 et/ou un de ses mutants en association avec au moins un autre agent de lutte biologique en tant que principe actif, et éventuellement au moins un agent de fixation,
ledit un de ses mutants étant obtenu à partir de la souche TAL-17 déposée le 03 juillet 2018 à la CNCM sous le numéro CNCM I-5333 et ledit un de ses mutants ayant les mêmes propriétés physiologiques que celles de la souche TAL-17 déposée le 03 juillet 2018 à la CNCM sous le numéro CNCM I-5333 ou des propriétés physiologiques améliorées par rapport à celle de la souche TAL-17 déposée le 03 juillet 2018 à la CNCM sous le numéro CNCM I-5333 dans la prévention et/ou le traitement d'infection chez un végétal provoquée par le champignon pathogène *Plasmopara viticola,* et dans laquelle ladite bouture de végétal enrobée est en particulier une bouture de vigne.

7. Procédé de protection et/ou de traitement d'un végétal contre une maladie provoquée par le champignon pathogène *Plasmopara viticola* comprenant l'application d'une composition phytosanitaire sur au moins une partie dudit végétal ou du sol à proximité dudit végétal, ladite au moins une partie dudit végétal étant en particulier une feuille ou un fruit,
dans lequel ladite composition phytosanitaire comprend :
- la souche isolée de *Trichoderma atroviride* TAL-17 déposée le 03 juillet 2018 à la CNCM sous le numéro CNCM I-5333 et/ou un de ses mutants en tant que principe actif ; ou
- la souche isolée de *Trichoderma atroviride* TAL-17 déposée le 03 juillet 2018 à la CNCM sous le numéro CNCM I-5333 et/ou un de ses mutants en association avec au moins un autre agent de lutte biologique en tant que principe actif,
ledit un de ses mutants étant obtenu à partir de la souche TAL-17 déposée le 03 juillet 2018 à la CNCM sous le numéro CNCM I-5333 et ledit un de ses mutants ayant les mêmes propriétés physiologiques que celles de la souche TAL-17 déposée le 03 juillet 2018 à la CNCM sous le numéro CNCM I-5333 ou des propriétés physiologiques améliorées par rapport à celle de la souche TAL-17 déposée le 03 juillet 2018 à la CNCM sous le numéro CNCM I-5333 dans la prévention et/ou le traitement d'infection chez un végétal provoquée par le champignon pathogène *Plasmopara viticola,* et dans lequel ledit végétal est en particulier la vigne.

8. Procédé selon la revendication 7, dans lequel ladite vigne appartient à un végétal de la famille des Vitacées, et en particulier dans lequel ladite vigne appartient à un genre choisi parmi *Parthenocissus, Ampelopsis* et *Vitis,* leurs hybrides et leurs cultivars.

9. Procédé selon la revendication 7 ou 8, dans lequel ladite composition phytosanitaire est épandue
- à raison de 10 à 500 L/ha, en particulier de 50 à 250 L/ha, notamment pour la pulvérisation aérienne ; ou
- à raison d'une quantité efficace de 10¹⁰ à 10¹⁴ spores/ha, en particulier de 10¹⁰ à 10¹² spores/ha, notamment pour les épandages aériens de type pulvérisation foliaire.

10. Procédé selon l'une quelconques des revendications 7 à 9, dans lequel
- la protection dudit végétal comprend une application préventive au niveau du sol de ladite composition phytosanitaire avec l'apport d'amendement ou du support organique :
∘ avant le semis d'une graine dudit végétal, ou
∘ avant le repiquage d'une bouture dudit végétal ;
et/ou
- la protection dudit végétal comprend une étape d'application de ladite composition phytosanitaire :
o sur une graine dudit végétal et/ou son environnement avant que ladite graine soit semée, ou
o sur une bouture dudit végétal et/ou son environnement avant que ladite bouture soit repiquée ;
et/ou
- le traitement dudit végétal comprend une étape de pulvérisation de ladite composition phytosanitaire aux cours de différents stades phénologiques de la plante (en prévention d'un risque d'infection dudit champignon pathogène de l'ensemble ou une partie de la plante).

11. Utilisation de la souche isolée de *Trichoderma atroviride* TAL-17 déposée le 03 juillet 2018 à la CNCM sous le numéro CNCM I-5333 et/ou un de ses mutants pour produire des métabolites,
ledit un de ses mutants étant obtenu à partir de la souche TAL-17 déposée le 03 juillet 2018 à la CNCM sous le numéro CNCM I-5333 et ledit un de ses mutants ayant les mêmes propriétés physiologiques que celles de la souche TAL-17 déposée le 03 juillet 2018 à la CNCM sous le numéro CNCM I-5333 ou des propriétés physiologiques améliorées par rapport à celle de la souche TAL-17 déposée le 03 juillet 2018 à la CNCM sous le numéro CNCM I-5333 dans la prévention et/ou le traitement d'infection chez un végétal provoquée par le champignon pathogène *Plasmopara viticola.*

## Patentansprüche

1. Verwendung eines isolierten Stammes von *Trichoderma atroviride* zur Vorbeugung und/oder Behandlung von Infektionen bei Pflanzen, die durch den pathogenen Pilz *Plasmopara viticola* verursacht werden,
wobei der isolierte Stamm von *Trichoderma atroviride* der Stamm TAL-17 ist, der am 3. Juli 2018 bei der CNCM unter der Nummer CNCM I-5333 hinterlegt wurde, und/oder eine seiner Mutanten,
wobei die eine seiner Mutanten aus dem Stamm TAL-17 gewonnen wird, der am 3. Juli 2018 bei der CNCM unter der Nummer CNCM I-5333 hinterlegt wurde, und wobei die eine seiner Mutanten die gleichen physiologischen Eigenschaften wie der Stamm TAL-17 aufweist, der am 3. Juli 2018 bei der CNCM unter der Nummer CNCM 1-5333 hinterlegt wurde, oder verbesserte physiologische Eigenschaften im Vergleich zu denen des Stammes TAL-17 aufweist, der am 3. Juli 2018 bei der CNCM unter der Nummer CNCM 1-5333 hinterlegt wurde, zur Vorbeugung und/oder Behandlung von Infektionen bei einer Pflanze, die durch den pathogenen Pilz *Plasmopara viticola* verursacht werden.

2. Verwendung eines isolierten Stammes von *Trichoderma atroviride* nach Anspruch 1, wobei die Pflanze eine Weinrebe ist,
und wobei die Weinrebe insbesondere zu einer Pflanze aus der Familie der *Vitaceae* gehört, die insbesondere ausgewählt ist aus den Gattungen *Parthenocissus, Ampelopsis* und *Vitis,* ihren Hybriden und ihren Kultivaren.

3. Verwendung einer Pflanzenschutzzusammensetzung zur Vorbeugung und/oder Behandlung einer durch den pathogenen Pilz *Plasmopara viticola* verursachten Infektion bei einer Pflanze, wobei die Pflanzenschutzzusammensetzung umfasst:
- den isolierten Stamm von *Trichoderma atroviride* TAL-17, der am 3. Juli 2018 bei der CNCM unter der Nummer CNCM 1-5333 hinterlegt wurde, und/oder eine seiner Mutanten als Wirkstoff; oder
- den isolierten Stamm von *Trichoderma atroviride* TAL-17, der am 3. Juli 2018 bei der CNCM unter der Nummer CNCM 1-5333 hinterlegt wurde, und/oder eine seiner Mutanten in Kombination mit mindestens einem weiteren biologischen Bekämpfungsmittel als Wirkstoff,
- wobei die eine seiner Mutanten aus dem Stamm TAL-17 gewonnen wird, der am 3. Juli 2018 bei der CNCM unter der Nummer CNCM 1-5333 hinterlegt wurde, und wobei die eine seiner Mutanten die gleichen physiologischen Eigenschaften wie der Stamm TAL-17 aufweist, der am 3. Juli 2018 bei der CNCM unter der Nummer CNCM 1-5333 hinterlegt wurde, oder verbesserte physiologische Eigenschaften im Vergleich zu denen des Stammes TAL-17, der am 3. Juli 2018 bei der CNCM unter der Nummer CNCM I-5333 hinterlegt wurde, zur Vorbeugung und/oder Behandlung von Infektionen bei einer Pflanze, die durch den pathogenen Pilz *Plasmopara viticola* verursacht werden.

4. Verwendung einer Pflanzenschutzzusammensetzung nach Anspruch 3, wobei die Pflanzenschutzzusammensetzung eine wirksame Menge von 10⁴ bis 10¹² Sporen/g, insbesondere von 10⁷ bis 10⁹ Sporen/g, umfasst,
und wobei die Pflanzenschutzzusammensetzung gegebenenfalls nach einem Vorbereitungsschritt erhalten wird, durch den sie anwendungsfertig wird.

5. Verwendung eines isolierten Stammes von *Trichoderma atroviride,* um die Wurzelbildung und/oder das Wachstum eines Pflanzenstecklings zu fördern, wobei der isolierte Stamm von *Trichoderma atroviride* der Stamm TAL-17 ist, der am 3. Juli 2018 bei der CNCM unter der Nummer CNCM I-5333 hinterlegt wurde, und/oder eine seiner Mutanten,
wobei die eine seiner Mutanten aus dem Stamm TAL-17 gewonnen wird, der am 3. Juli 2018 bei der CNCM unter der Nummer CNCM 1-5333 hinterlegt wurde, und wobei die eine seiner Mutanten die gleichen physiologischen Eigenschaften wie der Stamm TAL-17 aufweist, der am 3. Juli 2018 bei der CNCM unter der Nummer CNCM 1-5333 hinterlegt wurde, oder verbesserte physiologische Eigenschaften im Vergleich zu denen des Stammes TAL-17, der am 3. Juli 2018 bei der CNCM unter der Nummer 20 CNCM I-5333 hinterlegt wurde, zur Vorbeugung und/oder Behandlung von Infektionen bei einer Pflanze, die durch den pathogenen Pilz *Plasmopara viticola* verursacht werden,
et wobei es sich bei dem Pflanzensteckling insbesondere um einen Rebsteckling handelt.

6. Beschichteter Steckling, umfassend einen Pflanzensteckling, wobei der Pflanzensteckling mit einer Pflanzenschutz-Beschichtungszusammensetzung beschichtet ist, umfassend:
- den isolierten Stamm von *Trichoderma atroviride* TAL-17, der am 3. Juli 2018 bei der CNCM unter der Nummer CNCM 1-5333 hinterlegt wurde, und/oder eine seiner Mutanten als Wirkstoff und gegebenenfalls mindestens ein Bindemittel; oder
- den isolierten Stamm von *Trichoderma atroviride* TAL-17, der am 3. Juli 2018 bei der CNCM unter der Nummer CNCM I-5333 hinterlegt wurde, und/oder eine seiner Mutanten in Verbindung mit mindestens einem weiteren biologischen Bekämpfungsmittel als Wirkstoff und gegebenenfalls mindestens einem Bindemittel,
wobei die eine seiner Mutanten aus dem Stamm TAL-17 gewonnen wird, der am 3. Juli 2018 bei der CNCM unter der Nummer CNCM 1-5333 hinterlegt wurde, und wobei die eine seiner Mutanten die gleichen physiologischen Eigenschaften wie der Stamm TAL-17 aufweist, der am 3. Juli 2018 bei der CNCM unter der Nummer CNCM 1-5333 hinterlegt wurde, oder verbesserte physiologische Eigenschaften im Vergleich zu denen des Stammes TAL-17, der am 3. Juli 2018 bei der CNCM unter der Nummer CNCM I-5333 hinterlegt wurde, zur Vorbeugung und/oder Behandlung von Infektionen bei einer Pflanze, die durch den pathogenen Pilz *Plasmopara viticola* verursacht werden, und wobei das beschichtete Pflanzensteckling insbesondere ein Rebsteckling ist.

7. Verfahren zum Schutz und/oder zur Behandlung einer Pflanze gegen eine durch den pathogenen Pilz *Plasmopara viticola* verursachte Krankheit, umfassend das Aufbringen einer Pflanzenschutzzusammensetzung auf mindestens einen Teil der Pflanze oder den Boden in der Nähe der Pflanze, wobei der mindestens eine Teil der Pflanze insbesondere ein Blatt oder eine Frucht ist, wobei die Pflanzenschutzzusammensetzung umfasst:
- den isolierten Stamm von *Trichoderma atroviride* TAL-17, der am 3. Juli 2018 bei der 15 CNCM unter der Nummer CNCM I-5333 hinterlegt wurde, und/oder eine seiner Mutanten als Wirkstoff; oder
- den isolierten Stamm von *Trichoderma atroviride* TAL-17, der am 3. Juli 2018 bei der CNCM unter der Nummer CNCM I-5333 hinterlegt wurde, und/oder eine seiner Mutanten in Kombination mit mindestens einem weiteren biologischen Bekämpfungsmittel als Wirkstoff,
wobei die eine seiner Mutanten aus dem Stamm TAL-17 gewonnen wird, der am 3. Juli 2018 bei der CNCM unter der Nummer CNCM 1-5333 hinterlegt wurde, und wobei die eine seiner Mutanten die gleichen physiologischen Eigenschaften wie der Stamm TAL-17 aufweist, der am 3. Juli 2018 bei der CNCM unter der Nummer CNCM 1-5333 hinterlegt wurde, oder verbesserte physiologische Eigenschaften im Vergleich zu denen des Stammes TAL-17, der am 3. Juli 2018 bei der CNCM unter der Nummer 20 CNCM I-5333 hinterlegt wurde, zur Vorbeugung und/oder Behandlung von Infektionen bei einer Pflanze, die durch den pathogenen Pilz *Plasmopara viticola* verursacht werden, wobei die Pflanze insbesondere eine Weinrebe ist.

8. Verfahren nach Anspruch 7, wobei die Weinrebe zu einer Pflanze aus der Familie der *Vitaceae* gehört, wobei die Weinrebe insbesondere zu einer Gattung gehört, die ausgewählt ist aus *Parthenocissus, Ampelopsis* und *Vitis,* deren Hybriden und deren Kultivaren.

9. Verfahren nach Anspruch 7 oder 8, wobei die Pflanzenschutzzusammensetzung
- in einer Menge von 10 bis 500 l/ha, insbesondere von 50 bis 250 l/ha, insbesondere für Sprühverfahren aus der Luft, oder
- in einer wirksamen Menge von 10¹⁰ bis 10¹⁴ Sporen/ha, insbesondere von 10¹⁰ bis 10¹² Sporen/ha, insbesondere für die Ausbringung aus der Luft in Form einer Blattspritzung ausgebracht wird.

10. Verfahren nach einem der Ansprüche 7 bis 9, bei dem
- der Schutz der Pflanze eine vorbeugende Anwendung der Pflanzenschutzzusammensetzung auf den Boden unter Zugabe von Bodenverbesserungsmitteln oder organischen Trägern umfasst:
∘ vor der Aussaat eines Samens der Pflanze oder
∘ vor dem Umpflanzen eines Stecklings der Pflanze;
und/oder
- der Schutz dieser Pflanze einen Schritt der Anwendung der dieser Pflanzenschutzzusammensetzung umfasst:
∘ auf einen Samen dieser Pflanze und/oder dessen Umgebung, bevor dieser Samen ausgesät wird, oder
∘ auf einen Steckling dieser Pflanze und/oder dessen Umgebung, bevor dieser Steckling gepflanzt wird,
und/oder
- die Behandlung dieser Pflanze umfasst einen Schritt zum Sprühen dieser Pflanzenschutzzusammensetzung während verschiedener phänologischer Stadien der Pflanze (zur Vorbeugung eines Infektionsrisikos durch diesen pathogenen Pilz der gesamten Pflanze oder eines Teils davon).

11. Verwendung des isolierten Stammes von *Trichoderma atroviride* TAL-17, der am 3. Juli 2018 bei der CNCM unter der Nummer CNCM I-5333 hinterlegt wurde, und/oder eine seiner Mutanten zur Herstellung von Metaboliten, wobei die eine seiner Mutanten aus dem Stamm TAL-17 gewonnen wird, der am 3. Juli 2018 bei der CNCM unter der Nummer CNCM I-5333 hinterlegt wurde, und wobei die eine seiner Mutanten die gleichen physiologischen Eigenschaften wie der Stamm TAL-17 aufweist, der am 3. Juli 2018 bei der CNCM unter der Nummer CNCM 1-5333 hinterlegt wurde, oder verbesserte physiologische Eigenschaften im Vergleich zu denen des Stammes TAL-17, der am 3. Juli 2018 bei der CNCM unter der Nummer 20 CNCM 1-5333 hinterlegt wurde, zur Vorbeugung und/oder Behandlung von Infektionen bei einer Pflanze, die durch den pathogenen Pilz *Plasmopara viticola* verursacht werden.

## Claims

1. Use of an isolated strain of *Trichoderma atroviride* for the prevention and/or treatment of infection in a plant caused by the pathogenic fungus *Plasmopara viticola,*
said isolated strain of *Trichoderma atroviride* being strain TAL-17 deposited on July 3, 2018 at the CNCM under accession number CNCM I-5333 and/or a mutant thereof, said mutant being obtained from strain TAL-17 deposited on July 3, 2018 at the CNCM under accession number CNCM I-5333 and said mutant having the same physiological properties as strain TAL-17 deposited on July 3, 2018 at the CNCM under accession number CNCM I-5333 or improved physiological properties compared with strain TAL-17 deposited on July 3, 2018 at the CNCM under accession number CNCM 1-5333 in the prevention and/or treatment of infection in a plant caused by the pathogenic fungus *Plasmopara viticola.*

2. Use of an isolated strain of *Trichoderma atroviride* according to claim 1, wherein said plant is grapevine,
and in particular wherein said grapevine belongs to a plant of the family Vitaceae, notably selected from the genera *Parthenocissus, Ampelopsis* and *Vitis,* and their hybrids and cultivars.

3. Use of a phytosanitary composition for the prevention and/or treatment in a plant of infection caused by the pathogenic fungus *Plasmopara viticola,* wherein said phytosanitary composition comprises:
• the isolated strain of *Trichoderma atroviride* TAL-17 deposited on July 3, 2018 at the CNCM under accession number CNCM I-5333 and/or a mutant thereof as active ingredient; or
• the isolated strain of *Trichoderma atroviride* TAL-17 deposited on July 3, 2018 at the CNCM under accession number CNCM I-5333 and/or a mutant thereof in association with at least one other biological control agent as active ingredient,
said mutant being obtained from strain TAL-17 deposited on July 3, 2018 at the CNCM under accession number CNCM I-5333 and said mutant having the same physiological properties as strain TAL-17 deposited on July 3, 2018 at the CNCM under accession number CNCM I-5333 or improved physiological properties compared with strain TAL-17 deposited on July 3, 2018 at the CNCM under accession number CNCM I-5333 in the prevention and/or treatment of infection in a plant caused by the pathogenic fungus *Plasmopara viticola.*

4. Use of a phytosanitary composition according to claim 3, wherein said phytosanitary composition comprises an effective amount of 10⁴ to 10¹² spores/g, more particularly 10⁷ to 10⁹ spores/g,
and wherein said phytosanitary composition is optionally obtained after a preparation step rendering it ready for spreading.

5. Use of an isolated strain of *Trichoderma atroviride* to promote rooting and/or growth of a plant cutting, said isolated strain of *Trichoderma atroviride* being strain TAL-17 deposited on July 3, 2018 at the CNCM under accession number CNCM I-5333 and/or a mutant thereof,
said mutant being obtained from strain TAL-17 deposited on July 3, 2018 at the CNCM under accession number CNCM I-5333 and said mutant having the same physiological properties as strain TAL-17 deposited on July 3, 2018 at the CNCM under accession number CNCM I-5333 or improved physiological properties compared with strain TAL-17 deposited on July 3, 2018 at the CNCM under accession number CNCM 1-5333 in the prevention and/or treatment of infection in a plant caused by the pathogenic fungus *Plasmopara viticola,*
and wherein said plant cutting is in particular a grapevine cutting.

6. Coated cutting comprising a plant cutting, said plant cutting being coated with a phytosanitary coating composition comprising:
• the isolated strain of *Trichoderma atroviride* TAL-17 deposited on July 3, 2018 at the CNCM under accession number CNCM I-5333 and/or a mutant thereof as active ingredient, and optionally at least one fixing agent; or
• the isolated strain of *Trichoderma atroviride* TAL-17 deposited on July 3, 2018 at the CNCM under accession number CNCM I-5333 and/or a mutant thereof in association with at least one other biological control agent as active ingredient, and optionally at least one fixing agent,
said mutant being obtained from strain TAL-17 deposited on July 3, 2018 at the CNCM under accession number CNCM I-5333 and said mutant having the same physiological properties as strain TAL-17 deposited on July 3, 2018 at the CNCM under accession number CNCM I-5333 or improved physiological properties compared with strain TAL-17 deposited on July 3, 2018 at the CNCM under accession number CNCM I-5333 in the prevention and/or treatment of infection in a plant caused by the pathogenic fungus *Plasmopara viticola,* and wherein said coated plant cutting is in particular a grapevine cutting.

7. Method for protecting and/or treating a plant against a disease caused by the pathogenic fungus *Plasmopara viticola,* comprising applying a phytosanitary composition to at least a portion of said plant or to the soil in the vicinity of said plant, said at least a portion of said plant being in particular a leaf or a fruit,
wherein said phytosanitary composition comprises:
• the isolated strain of *Trichoderma atroviride* TAL-17 deposited on July 3, 2018 at the CNCM under accession number CNCM I-5333 and/or a mutant thereof as active ingredient; or
• the isolated strain of *Trichoderma atroviride* TAL-17 deposited on July 3, 2018 at the CNCM under accession number CNCM I-5333 and/or a mutant thereof in association with at least one other biological control agent as active ingredient,
said mutant being obtained from strain TAL-17 deposited on July 3, 2018 at the CNCM under accession number CNCM I-5333 and said mutant having the same physiological properties as strain TAL-17 deposited on July 3, 2018 at the CNCM under accession number CNCM I-5333 or improved physiological properties compared with strain TAL-17 deposited on July 3, 2018 at the CNCM under accession number CNCM I-5333 in the prevention and/or treatment of infection in a plant caused by the pathogenic fungus *Plasmopara viticola,* and wherein said plant is in particular grapevine.

8. Method according to claim 7, wherein said grapevine belongs to a plant of the family Vitaceae, and in particular wherein said grapevine belongs to a genus selected from *Parthenocissus, Ampelopsis* and *Vitis,* their hybrids and cultivars.

9. Method according to any one of claims 7 or 8, wherein said phytosanitary composition is applied:
• at a rate of 10 to 500 L/ha, in particular 50 to 250 L/ha, notably for aerial spraying; or
• at an effective amount of 10¹⁰ to 10¹⁴ spores/ha, in particular 10¹⁰ to 10¹² spores/ha, notably for aerial spreading of the foliar spraying type.

10. Method according to any one of claims 7 to 9, wherein:
• the protection of said plant comprises a preventive application to the soil of said phytosanitary composition together with the addition of an amendment or of organic carrier:
∘ before sowing a seed of said plant, or
∘ before transplanting a cutting of said plant;
and/or
• the protection of said plant comprises a step of applying said phytosanitary composition:
∘ to a seed of said plant and/or its environment before said seed is sown, or
∘ to a cutting of said plant and/or its environment before said cutting is transplanted;
and/or
• the treatment of said plant comprises a step of spraying said phytosanitary composition during different phenological stages of the plant (as prevention against a risk of infection of all or part of the plant by said pathogenic fungus).

11. Use of the isolated strain of *Trichoderma atroviride* TAL-17 deposited on July 3, 2018 at the CNCM under accession number CNCM I-5333 and/or a mutant thereof for producing metabolites,
said mutant being obtained from strain TAL-17 deposited on July 3, 2018 at the CNCM under accession number CNCM I-5333 and said mutant having the same physiological properties as strain TAL-17 deposited on July 3, 2018 at the CNCM under accession number CNCM I-5333 or improved physiological properties compared with strain TAL-17 deposited on July 3, 2018 at the CNCM under accession number CNCM I-5333 in the prevention and/or treatment of infection in a plant caused by the pathogenic fungus *Plasmopara viticola.*
